# EUROPEAN PATENT SPECIFICATION

(11) **EP 2 980 688 B1**
(45) Date of publication and mention of the grant of the patent: **18.09.2019**
(21) Application number: 14774528.5
(22) Date of filing: 25.03.2014
(51) Int. Cl.: H04L 12/58

(54) **DISPLAY CONTROL DEVICE, DISPLAY CONTROL METHOD AND PROGRAM**
ANZEIGESTEUERUNGSVORRICHTUNG, ANZEIGESTEUERUNGSVERFAHREN UND PROGRAMM
DISPOSITIF DE COMMANDE D'AFFICHAGE, PROCÉDÉ DE COMMANDE D'AFFICHAGE ET PROGRAMME

(30) Priority: 29.03.2013 JP 2013070876
(43) Date of publication of application: 03.02.2016
(73) Proprietor: NEC CORPORATION, Minato-ku, Tokyo 108-8001 (JP)
(72) Inventor: KATAYAMA, Toru, Minato-ku, Tokyo 1088001 (JP)
(74) Representative: Vossius & Partner Patentanwälte Rechtsanwälte mbB
(86) International application number: PCT/JP2014/058198
(87) International publication number: WO 2014/157148

(56) References cited:
- WO-A1-2008/059594
- WO-A1-2009/012117
- JP-A- H03 289 737
- JP-A- 2001 117 849
- JP-A- 2001 325 200
- JP-A- 2012 221 226
- US-A1- 2004 015 547
- US-A1- 2013 055 112
- US-B1- 6 630 944

## Description

### TECHNICAL FIELD

The present invention relates to a display control device, a display control method, and a program.

### BACKGROUND ART

For example, there are chat systems in which a message input from any of a plurality of terminals connected over a network is displayed on another terminal in real time and participants talk with each other (see Patent Document 1). In the chat system described in Patent Document 1, association of content of messages of the participants is performed individually for each participant, and a correlation diagram of the association is created.

### Prior Art Document

### Patent Document

Patent Document 1: Japanese Unexamined Patent Application, First Publication No. 2001-325200

US 2013/0055112 (A1) discloses a system for conducting chat sessions on a screen, the system comprising an apparatus for displaying a temporal sequence of messages including simultaneously displaying a plurality of message icons representing a corresponding plurality of messages including older messages and newer messages wherein the apparatus for displaying includes a processor determining positioning for message icons such that the older messages' icons visually appear to be deeper than the newer messages' icons, thereby to enhance a viewer's perception of the temporal characteristics of the sequence.

### SUMMARY OF INVENTION

### Problems to be solved by the Invention

However, when a posting display screen on which posted messages are sequentially displayed from the top to the bottom of a time line for displaying the messages in a posted order of the posted messages is used, if a past message and a newly posted message are associated, the newly posted message may be displayed on the time line for displaying the past message. That is, the newly posted message is not displayed in a position in which a latest message is to be displayed, and may be displayed near the past message. In this case, there is a problem in that a user overlooks the latest message.

Therefore, an exemplary object of the present invention is to provide a display control device, a display control method, and a program capable of solving the above problem.

### Means for Solving the Problems

The present invention has been made to solve the above-described problem, and a display control device in an exemplary aspect of the present invention includes: an input unit that receives input data that is input by a user; a display unit that includes a plurality of display areas in which the input data is displayed, and displays the input data from the user in a display area assigned to the user; and a display control unit that causes input data that is an associating target to be displayed in the display area in a display mode indicating that the input data that is the associating target is associated with at least one of the input data displayed on the display unit and the display area.

Further, the present invention has been made to solve the above-described problem, and a display control method in an exemplary aspect of the present invention includes: receiving input data that is input by a user; displaying the input data from the user in a display area assigned to the user among a plurality of display areas in which the input data is displayed; and when displaying the input data from the user, causing input data that is an associating target to be displayed in the display area in a display mode indicating that the input data that is the associating target is associated with at least one of the input data displayed in the display area and the display area.

Further, the present invention has been made to solve the above-described problem, and a program in an exemplary aspect of the present invention is a program for causing a computer to function as: an input unit that receives input data that is input by a user; a display unit that includes a plurality of display areas in which the input data is displayed, and displays the input data from the user in a display area assigned to the user; and a display control unit that causes input data that is an associating target to be displayed in the display area in a display mode indicating that the input data that is the associating target is associated with at least one of the input data displayed on the display unit and the display area.

### Exemplary Advantageous Effects of Invention

The present invention can prevent the latest message associated with the message posted in the past from being overlooked by the user.

### BRIEF DESCRIPTION OF DRAWINGS

FIG. 1 is a diagram illustrating an overview of a display control device in accordance with an exemplary embodiment of the present invention.
FIG. 2 is a diagram illustrating an overview of a posting information display control system in accordance with an exemplary embodiment of the present invention.
FIG. 3 is a sequence diagram describing the overview of the posting information display control system in accordance with an exemplary embodiment of the present invention.
FIG. 4 is a block diagram describing an example of basic structural components of the posting information display control system in accordance with an exemplary embodiment of the present invention.
FIG. 5 is a diagram describing an example of a posting information table in accordance with an exemplary embodiment of the present invention.
FIG. 6 is a diagram describing an example of display mode example 1 in accordance with an exemplary embodiment of the present invention.
FIG. 7 is a diagram describing an example of display mode example 2 in accordance with an exemplary embodiment of the present invention.
FIG. 8 is a diagram describing an example of display mode example 3 in accordance with an exemplary embodiment of the present invention.
FIG. 9 is a diagram describing an example of display mode example 4 in accordance with an exemplary embodiment of the present invention.
FIG. 10 is a diagram describing an example of another display mode example in accordance with an exemplary embodiment of the present invention.
FIG. 11 is a flowchart describing an example of an associating method in accordance with an exemplary embodiment of the present invention.
FIG. 12 is a flowchart describing another example of an associating method in accordance with an exemplary embodiment of the present invention.
FIG. 13 is a flowchart describing another example of an associating method in accordance with an exemplary embodiment of the present invention.
FIG. 14 is a diagram describing an example of display mode example 5 in accordance with an exemplary embodiment of the present invention.
FIG. 15 is a flowchart describing another example of an associating method in accordance with an exemplary embodiment of the present invention.
FIG. 16 is a flowchart describing another example of an associating method in accordance with an exemplary embodiment of the present invention.

### MODES FOR CARRYING OUT THE INVENTION

### [First exemplary embodiment]

Hereinafter, an exemplary embodiment of the present invention will be described with reference to the drawings.

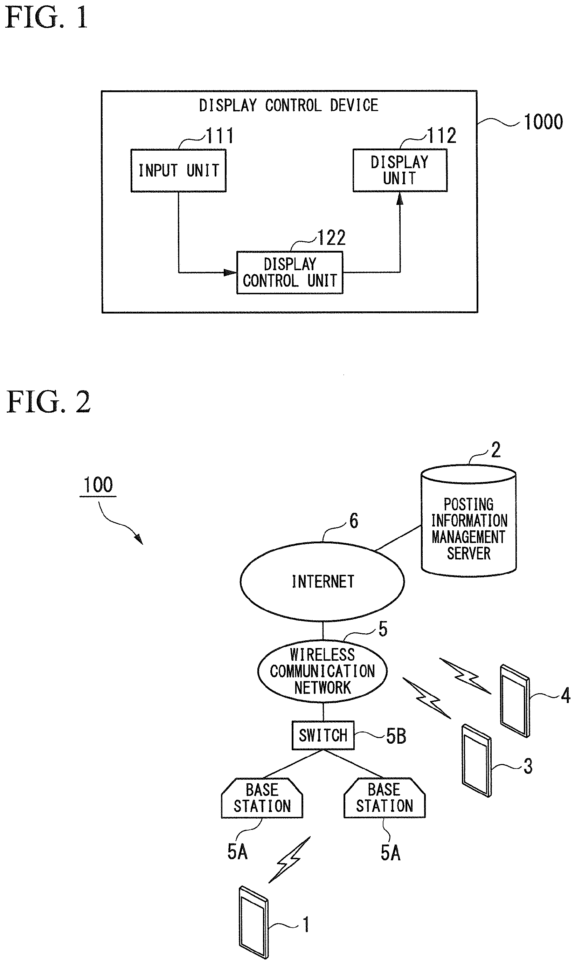

FIG. 1 is a diagram illustrating an overview of a display control device 1000 in accordance with an exemplary embodiment of the present invention. This display control device 1000 includes an input unit 111, a display unit 112, and a display control unit 122.

The input unit 111 receives input data that is input by a user.

The display unit 112 displays a plurality of display areas assigned to users. This display unit 112 displays input data input by each user in the display area assigned to each user.

The display control unit 122 causes the input data that is an associating target to be displayed in the display area in a display mode indicating that the input data that is the associating target is associated with input data or a display area displayed on the display unit 112.

The input unit 111, the display unit 112, and the display control unit 122 may be mounted on one device or may be mounted on separate devices.

FIG. 2 is a diagram illustrating an overview of a posting information display control system 100 in accordance with an exemplary embodiment of the present invention.

This posting information display control system 100 is a system that receives input data (hereinafter referred to as a message) posted from a terminal of each user and causes a posting display screen for displaying the received message in the display area assigned to each user to be displayed in the user's terminal. This posting information display control system 100 mainly includes a plurality of user terminals (for example, user terminals 1, 3, and 4) such as mobile terminals, and a posting information management server 2. It is to be noted that the plurality of user terminals 1, 3, and 4 are an example of user terminals belonging to the same group in which the posted message is shared. This group can be designated by the user, and consists of members that share the posted message in a chat format. In the present exemplary embodiment, users of the user terminals 1, 3, and 4 are denoted as users A, B, and C.

The posting information management server 2 is a server that includes a database that stores the message posted on a Web, and provides this posted message to the plurality of user terminals 1, 3, and 4 grouped in advance. This posting information management server 2 is, for example, a server that provides a posting Web service for viewing of the message posted on the Web, creating the message, and posting the created message on the Web.

Specifically, the posting information management server 2 collects a message posted from a service subscriber that subscribes to this posting Web service, and records the message for each group. If there is a viewing request from the service subscriber, data of the posting display screen for each group in which a message that is a request target is displayed is transmitted to the terminal of the service subscriber belonging to the group. It is to be noted that this posting information management server 2 may be a server specified using identification information assigned to an individual server, or may be a server specified using, for example, a Uniform Resource Locator (URL) of a Web page providing the posting Web service.

Further, when the posting information management server 2 acquires the message posted by, for example, the user terminals 1, 3, and 4, the posting information management server 2 associates each of posted time information indicating when this message is posted and user identification information for identifying the posting user with the posted message and stores them in its storage unit.

It is to be noted that the posted time information is information indicating when the message is posted and, for example, may be information indicating a time at which the posting information management server 2 receives the posted message or may be information indicating a time at which the user terminal 1 or the like transmits the posted message.

When the user terminal 1, 3 or 4 connects to a wireless communication network (mobile communication network) 5 via a nearest base station 5A and a switch 5B, the user terminal 1, 3 or 4 is able to communicate with another user terminal 1, 3, or 4 over the wireless communication network 5. Further, when the user terminal 1, 3, or 4 connects to the Internet 6 over the wireless communication network 5, the user terminal 1, 3, or 4 is able to access a Web site and view a Web page.

In the present exemplary embodiment, an example in which the display control device 1000 is mounted on the user terminals 1, 3, and 4 will be described. However, the present invention is not limited thereto, and the display control device 1000 may be a smart phone, a portable game machine, a Personal Digital Assistant (PDA), a tablet personal computer (PC), a laptop PC, or the like. Further, a system including the user terminals 1, 3, and 4 and the posting information management server 2 may be the display control device 1000.

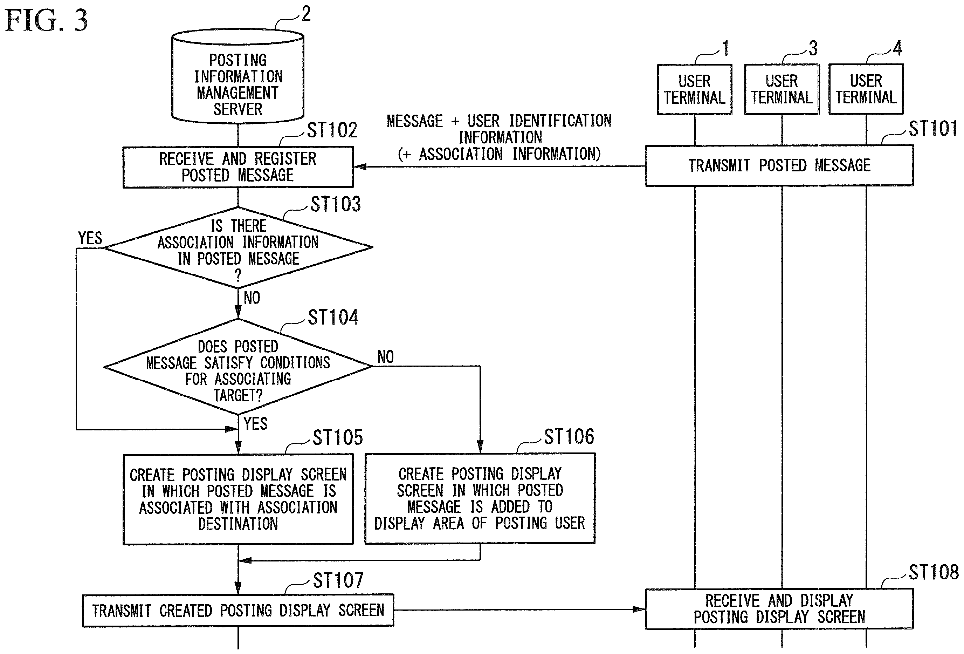

Next, an overview of the posting information display control system 100 in accordance with the present exemplary embodiment will be described with reference to FIG. 3. FIG. 3 is a sequence diagram illustrating an overview of the posting information display control system 100 in accordance with the present exemplary embodiment.

### (Step ST101)

Messages are assumed to be posted from the user terminals 1, 3, and 4 to a talk room of a group to which the users A to C belong as members. It is to be noted that the talk room is a virtual posting area created for each group. The users A to C can create the talk room by registering members participating in the talk room. Further, the users A to C can post messages to a designated talk room by designating the created talk room and posting the messages. That is, the posting information management server 2 manages the posted messages so that the posted messages are shared by only the members designated by the users A to C.

Here, the user terminals 1, 3, and 4 transmit information in which user identification information indicating a posting user is associated with the posted message to the posting information management server 2. This user identification information may be a poster ID (identifier) assigned to a poster or may be a terminal ID assigned to each terminal.

Further, if an association destination with which the posted message is associated is designated when the message is posted, the user terminal 1 associates information indicating the designated association destination (hereinafter, association information) with the posted message, and transmits it to the posting information management server 2.

For example, in the user terminals 1, 3, and 4, when a URL of the posting Web service provided by the posting information management server 2 is designated, the user terminals 1, 3, and 4 request the posting information management server 2 to provide a Web page having the designated URL. The posting information management server 2 transmits the requested Web page to the user terminals 1, 3, and 4; thereafter, the user terminals 1, 3, and 4 transmit information input through the received Web page to the posting information management server 2. It is to be noted that the example in which the destination of transmission of the information to the posting information management server 2 is specified using the URL of the posting Web service provided by the posting information management server 2 has been described here. However, the present invention is not limited thereto, and the user terminals 1, 3, 4 may transmit information to the posting information management server 2 based on the identification information assigned to the posting information management server 2.

### (Step ST102)

Then, the posting information management server 2, for example, acquires a time at which the posting information is received as a posted time, associates posted time information indicating this posted time with the received message and the user identification information, and registers them in its storage unit for each group.

In this case, the posting information management server 2 determines whether the association information is included in the received message. If it is determined that the association information is included, the posting information management server 2 associates the association information with the message, and registers them in its storage unit.

### (Step ST103)

Then, the posting information management server 2 determines whether the association information is associated with the message registered in the storage unit. For example, the posting information management server 2 determines whether the posting information management server 2 receives the association information together with the posted message from the user terminals 1, 3, and 4. If it is determined that the posting information management server 2 receives the association information together with the posted message, the posting information management server 2 proceeds to a process in step ST105.

### (Step ST104)

In contrast, if it is determined that the posting information management server 2 does not receive the association information together with the posted message, the posting information management server 2 determines whether the posted message satisfies conditions for an associating target. For example, the posting information management server 2 analyzes text information included in the posted message to determine whether the same text as in the text information included in the posted message obtained as a result of the analysis is included in a message posted in the past within the talk room in which the message is posted. It is to be noted that the posting information management server 2 determines whether common text is included from the past message posted within a predetermined period from a present time point. For example, when the same or similar place name, personal name, name of an organization, work title, or other frequent keywords are included in a message posted in the past within the predetermined period and a message posted at a present time point, the posting information management server 2 determines that both satisfy the conditions for the associating target.

### (Step ST105)

If it is determined in step ST103 that the posting information management server 2 receives the association information together with the posted message, or when it is determined in step ST104 that the posted message satisfies the conditions for the associating target, the posting information management server 2 creates a posting display screen in which the posted message (associating target) is associated with the association destination (associated target). It is to be noted that in a process of creating the posting display screen in which the posted message is associated with the association destination, the posting information management server 2 can execute, for example, any one of display mode examples 1 to 5 to be described below. It is to be noted that the posting information management server 2 is not limited thereto, and the display mode may be different from the examples to be described below as long as the display mode is a display mode in which the posted message looks like a message associated with the association destination.

### (Step ST106)

In contrast, if it is determined in step ST104 that the posted message does not satisfy the conditions for the associating target (that is, including a case in which it is determined that there is no association information in the posted message), the posting information management server 2 creates the posting display screen in which the posted message is added to the display area of the posting user without associating the posted message with the association destination.

### (Step ST107)

Then, the posting information management server 2 transmits data of the posting display screen created in step ST105 or ST106 to all the terminals (the user terminals 1, 3, and 4 in the present exemplary embodiment) of the users A to C belonging to the same group as the user posting the message based on the posted user identification information. It is to be noted that the user identification information of the user terminals 1, 3, and 4 of the users A to C belonging to the same group is registered in the posting information management server 2, and the posting information management server 2 transmits the data of the posting display screen to the user terminals 1, 3, and 4 with reference to the user identification information.

### (Step ST108)

The user terminals 1, 3, and 4 belonging to the same group display the posting display screen including the latest posted messages based on the data of the posting display screen received from the posting information management server 2.

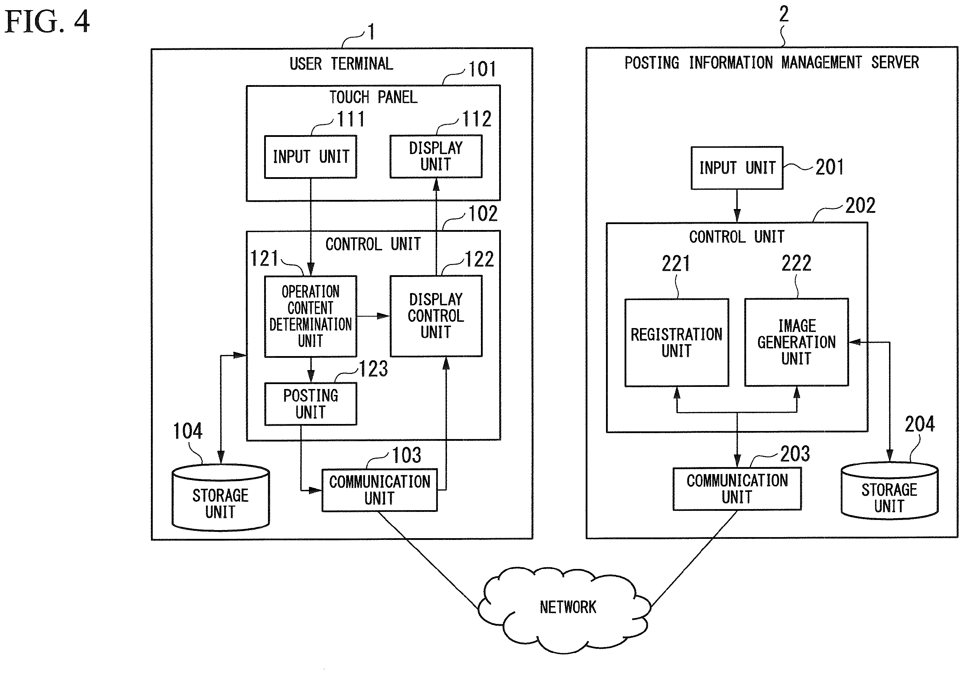

Next, an example of basic structural components of the user terminal 1 and the posting information management server 2 will be described with reference to FIG. 4. FIG. 4 is a block diagram illustrating an example of the basic structural components of the user terminal 1 and the posting information management server 2. It is to be noted that the user terminals 3 and 4 also have the same configuration as the user terminal 1, and thus a detailed description thereof will be omitted.

The user terminal 1 includes a touch panel 101, a control unit 102, a communication unit 103, and a storage unit 104.

The touch panel 101 includes an input unit 111 and a display unit 112 which are provided integrally.

The input unit 111 includes a sensor that receives an operation from a user, and outputs a detection result of the sensor to the control unit 102. In the present exemplary embodiment, the input unit 111 detects a contact position of a finger of the user touching an operation screen at constant time intervals, using the sensor, and outputs a detection result of the sensor. It is to be noted that the present invention is not limited thereto, and the input unit 111 may detect, for example, a position of a finger of the user, an operation instruction means (a stylus pen), or the like approaching the operation screen using a non-contact sensor.

The display unit 112 displays an image in accordance with control of the control unit 102. In the present exemplary embodiment, the display unit 112 displays a posting display screen that displays the posted message for each group. This display unit 112 is arranged in a layer under the input unit 111, and the posting display screen displayed by the display unit 112 functions as an operation screen when the input unit 111 used for posting receives the operation.

It is to be noted that the display unit 112 may include a plurality of display areas divided in the same display device or may be configured by an independent display device for each display area.

The control unit 102 is a central processing unit (CPU), and includes functional components that read variety pieces of information stored in the storage unit 104, perform overall control of the user terminal 1, and function in accordance with processing contents. This control unit 102 includes, as the functional components, an operation content determination unit 121, a display control unit 122, and a posting unit 123.

The operation content determination unit 121 determines operation content received by the touch panel 101 based on an output from the input unit 111 of the touch panel 101 receiving the operation. For example, the operation content determination unit 121 determines a movement of a finger of the user from the contact position (or approach position) and the contact time (or approach time) of the finger of the user indicated by the detection result of the touch panel 101. Further, the operation content determination unit 121 determines operation content indicated by the determined movement of the finger of the user based on a positional relationship between the determined movement of the finger of the user and the image displayed on the touch panel 101 when the operation is received.

For example, when the input unit 111 of the touch panel 101 detects an operation in which the finger of the user contacts or approaches an icon portion or a text portion on the display screen, the operation content determination unit 121 determines that the operation is a touch operation. Further, when the touch panel 101 detects an operation in which the finger moves in a state in which the touch operation is performed and the icon portion or a predetermined operation area is indicated, the operation content determination unit 121 determines that the operation is a sliding operation. Further, when the input unit 111 of the touch panel 101 detects an operation in which the finger of the user contacts or approaches an icon or text portion on the display screen for a predetermined time or more, the operation content determination unit 121 determines that the operation is a long tap operation. Further, when the touch panel 101 detects an operation in which the finger is moved in a state in which a touch operation is performed and an icon is indicated, the designated icon is moved to a predetermined movement destination area, and the touch operation is released (for example, the finger is detached), the operation content determination unit 121 determines that the operation is a drag and drop operation.

Further, the operation content determination unit 121 instructs the display control unit 122 to display, on the touch panel 101, display content corresponding to operation content based on the determination result.

The display control unit 122 executes display control with respect to the touch panel 101 based on the operation content indicated by the determination result of the operation content determination unit 121 or a command input via the communication unit 103.

The posting unit 123 posts the input message on the Web. When this posting unit 123 is instructed to post the message input through an input field displayed on the touch panel 101, the posting unit 123 associates a poster ID (or terminal ID) with the input message, and outputs the resultant message to the communication unit 103. Accordingly, the communication unit 103 transmits the message with which the poster ID (or the terminal ID) has been associated to the posting information management server 2. It is to be noted that the poster ID and the terminal ID are identification information for identifying the posting user. The poster ID is identification information assigned to a member who posts the message to the posting information management server 2. The terminal ID is unique identification information assigned to each user terminal.

Further, if an association destination with which the posted message is associated is designated when the message is posted, the posting unit 123 creates the association information indicating the designated association destination, associates the association information with the posted message, and transmits it to the posting information management server 2. For example, when the past messages or the user (or the display area of the user) participating in the group is designated as the association destination by the user through the touch panel 101, the posting unit 123 creates association information indicating, for example, the designated message or user. A method for designating the association destination will be described below.

It is to be noted that the posting unit 123 is not limited to this method. When the association destination is not designated, the posting unit 123 may determine a latest message or the like as the association destination and create association information. When common text is included in the posted message and the past message, the posting unit 123 may determine the past message including the text common to the posted message to be the association destination, and create the association information.

The communication unit 103 connects to the wireless communication network 5 or the Internet 6 via the base station 5A and the switch 5B. This communication unit 103 transmits information such as the posted message to the posting information management server 2, for example, via the Internet 6, and receives information such as a message transmitted from the posting information management server 2.

The storage unit 104 stores variety pieces of information used for a process of the user terminal 1. The storage unit 104 temporarily stores a message that is being created or stores, for example, data of the posting display screen received from the posting information management server 2, and the poster ID (or the terminal ID). It is to be noted that the storage unit 104 may include, for example, a portable memory (recording medium) that is detachably provided in the user terminal 1, such as an SD card or an integrated circuit (IC) card, or may be on a predetermined external server, which is not illustrated.

The posting information management server 2 includes an input unit 201, a control unit 202, a communication unit 203, and a storage unit 204.

The input unit 201 is an interface that inputs information or an interface that receives an operation.

The control unit 202 is a CPU, and includes functional components that read variety pieces of information stored in the storage unit 204, perform the overall control of the posting information management server 2, and function in accordance with individual processing content. This control unit 202 includes, as the functional components, a registration unit 221, and an image generation unit 222.

The registration unit 221, for example, acquires a time at which the posting information is received as a posted time, associates posted time information indicating this posted time with each of the received message and user identification information, and writes them in a posting information table in the storage unit 204 for each group.

In this case, the registration unit 221 determines whether the association information is included in the received message. If it is determined that the association information is included, the registration unit 221 associates this association information with the message, and writes them in the posting information table in the storage unit 204.

Further, the registration unit 221 may determine whether the received message satisfies the conditions for the associating target. For example, when the same or similar place name, personal name, name of an organization, work title, or other frequent keyword is included in a message posted in the past within a predetermined period and a message posted at a present time point, the registration unit 221 determines that both satisfy the conditions for the associating target and creates association information associating these messages, associates the association information with these associated messages, and writes them in the posting information table in the storage unit 204.

The image generation unit 222 determines whether the association information is associated with a message additionally displayed on the posting display screen with reference to the posting information table in the storage unit 204. For example, the image generation unit 222 determines whether the association information is received together with the posted message from, for example, the user terminal 1, 3, or 4.

Further, when it is determined that the association information is not associated with the message additionally displayed on the posting display screen, the image generation unit 222 determines whether the message additionally displayed on the posting display screen satisfies the conditions for the associating target.

For example, the image generation unit 222 analyzes text information included in the posted message to determine whether the same text as in the text information included in the posted message obtained as a result of the analysis is included in a message posted in the past within the talk room in which the message is posted. For example, when the same or similar place name, personal name, name of an organization, work title, or other frequent keyword is included in a message posted in the past within a predetermined period and a message posted at a present time point, the image generation unit 222 determines that both satisfy the conditions for the associating target.

Further, when the image generation unit 222 determines that the association information is associated with the message additionally displayed on the posting display screen, or when the image generation unit 222 determines that the message additionally displayed on the posting display screen satisfies the conditions for the associating target, the image generation unit 222 creates a posting display screen in which the posted message is associated with the association destination.

It is to be noted that in the process of creating the posting display screen in which the posted message is associated with the association destination, the image generation unit 222 may execute, for example, any one of display mode examples 1 to 5 to be described below.

The communication unit 103 connects to the wireless communication network 5 and the Internet 6 via the base station 5A and the switch 5B. The communication unit 203 receives information such as the posted message from the user terminals 1, 3, and 4, for example, via the Internet 6, and transmits data of the created posting display screen to the user terminals 1, 3, and 4.

The storage unit 204 stores variety pieces of information used for a process of the posting information management server 2. This storage unit 204 stores, for example, user identification information of members for each group participating in the talk room, and includes a posting information table in which the posted message or the like is written. Moreover, the storage unit 204 stores a URL of the posting Web service provided by the posting information management server 2. It is to be noted that the storage unit 204 may be configured to include, for example, a portable memory (recording medium) that is detachably provided in the posting information management server 2, such as an SD card or an IC card, or may be on a predetermined external server, which is not illustrated.

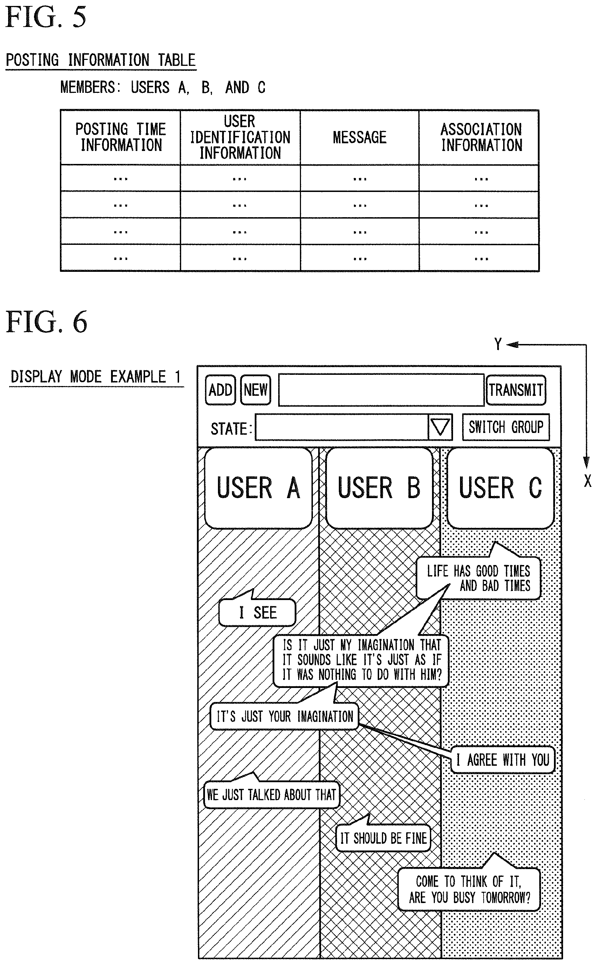

Next, an example of the posting information table stored in the storage unit 204 of the posting information management server 2 will be described with reference to FIG. 5. FIG. 5 is a diagram illustrating an example of the posting information table in the present exemplary embodiment.

As illustrated in FIG. 5, the posting information table is a table that stores posted time information, user identification information, messages, and association information in association with each other.

Next, display mode example 1 in accordance with the present exemplary embodiment will be described with reference to FIG. 6. FIG. 6 is a diagram illustrating an example of a display screen of display mode example 1 in accordance with the present exemplary embodiment.

This display mode example 1 is a display mode in which a balloon image displaying the input data that is an associated target is linked to a balloon image displaying the input data that is an associating target when the input data (the associating target) received by the input unit 111 is shown to be associated with the input data that is the associated target in the display area of the display unit 112.

Further, display mode example 1 is a display mode in which a balloon image displaying latest input data displayed in the display area that is an associated target is linked to a balloon image displaying the input data that is an associating target when the input data (the associating target) received by the input unit 111 is shown to be associated with the input data that is the associated target in the display area of the display unit 112.

FIG. 6 illustrates an example of a posting display screen on which a display area assigned to the user A (hereinafter referred to as the display area of the user A), a display area assigned to the user B (hereinafter referred to as the display area of the user B), and a display area assigned to the user C (hereinafter referred to as the display area of the user C) are displayed. The display areas are displayed, for example, using a different color or pattern for each user.

In the display area of the user A, messages "I see", "It's just your imagination", and "We just talked about that" are displayed from top to bottom in a posted order.

In the display area of the user B, messages "Is it just my imagination that it sounds like it's just as if it was nothing to do with him?" and "It should be fine" are displayed from top to bottom in a posted order.

In the display area of the user C, messages "Life has good times and bad times", "I agree with you" and "Come to think of it, are you busy tomorrow?" are displayed from top to bottom in a posted order.

It is to be noted that in the present exemplary embodiment, in an XY coordinate system of the posting display screen, the display areas of the users are arranged in a Y-axis direction. Further, the messages are arranged in an X-axis direction in posted time series.

Further, in the present exemplary embodiment, each message is displayed in a balloon image, as illustrated in FIG. 6. This balloon image includes a balloon body portion for displaying the message, and a lead line portion drawn from this balloon body portion. This lead line portion has an acute angle shape projecting from the balloon body portion, as illustrated in FIG. 6. A message to which a tip (vertex) of the acute angle shape points is a message that is an associated target with which the message displayed in the balloon image is associated.

In the present exemplary embodiment, each message is associated with a message posted in the past from the message. Therefore, on the posting display screen, a lead line portion of the message associated with the message posted in the past is displayed in an overlapping manner on the balloon body portion of the balloon image for displaying the message posted in the past.

Specifically, the vertex of the lead line portion of the balloon image of the message " Is it just my imagination that it sounds like it's just as if it was nothing to do with him?" of the user B extends to the balloon body portion of the balloon image of the message "Life has good times and bad times" of the user C. This indicates that the message "Is it just my imagination that it sounds like it's just as if it was nothing to do with him?" of the user B is associated with the message "Life has good times and bad times" of the user C.

Further, the vertex of the lead line portion of the balloon image of the message "It's just your imagination" of the user A extends to the balloon body portion of the balloon image of the message " Is it just my imagination that it sounds like it's just as if it was nothing to do with him?" of the user B. This indicates that the message "It's just your imagination" of the user A is associated with the message " Is it just my imagination that it sounds like it's just as if it was nothing to do with him?" of the user B.

Further, the vertex of the lead line portion of the balloon image of the message "I agree with you" of the user C extends to the balloon body portion of the balloon image of the message "It's just your imagination" of the user A. This indicates that the message "I agree with you" of the user C is associated with the message "It's just your imagination" of the user A.

Thus, since the messages are associated with each other and displayed using the lead lines of the balloons, a user viewing the posting display screen illustrated in FIG. 6 can intuitively recognize that the series of messages, "Life has good times and bad times" → " Is it just my imagination that it sounds like it's just as if it was nothing to do with him?" → "It's just your imagination" → "I agree with you" is based on associated topics.

In contrast, the message "We just talked about that" of the user A and the message "Come to think of it, are you busy tomorrow?" of the user C are not associated with any message. Therefore, the user viewing the posting display screen illustrated in FIG. 6 can intuitively recognize that the messages are associated with new topics.

Further, the messages are arranged and displayed in time series in the X-axis direction, as illustrated in FIG. 6. Thus, a user viewing the posting display screen illustrated in FIG. 6 can also intuitively recognize the posted order of the messages.

Further, each message is displayed in the display area assigned to its user, as illustrated in FIG. 6. Thus, a user viewing the posting display screen illustrated in FIG. 6 can also intuitively recognize a poster of each message.

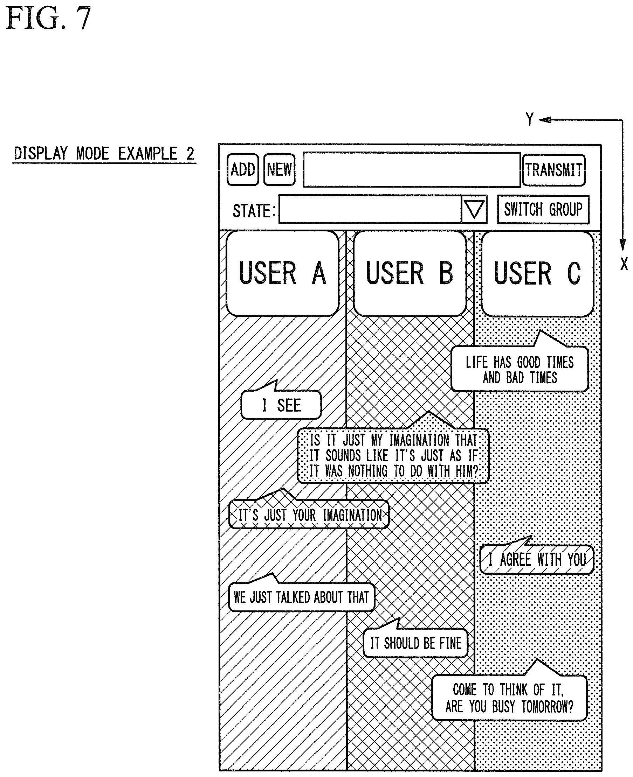

Next, display mode example 2 in accordance with the present exemplary embodiment will be described with reference to FIG. 7. FIG. 7 is a diagram illustrating an example of a posting display screen of display mode example 2 in accordance with the present exemplary embodiment.

This display mode example 2 is a display mode in which the input data that is an associating target is displayed in a balloon image in the same style as the display area in which the input data that is an associated target is displayed when the input data (the associating target) received by the input unit 111 is shown to be associated with the input data that is the associated target in the display area of the display unit 112.

Further, display mode example 2 is a display mode in which the input data that is an associating target is displayed in a balloon image in the same style as the display area that is an associated target when the input data (the associating target) received by the input unit 111 is shown to be associated with the input data that is the associated target in the display area of the display unit 112.

It is to be noted that in display mode example 2, similarly, the posted message is displayed in the balloon image, the display areas assigned to the users A to C are displayed in a lowermost layer of the posting display screen, and message are displayed in an order of posted time, as described with reference to FIG. 6. Here, a difference from display mode example 1 will be mainly described. Display mode example 2 is different from display mode example 1 in that a style such as a color or pattern of the associated balloon image is the same as the color or pattern of the display areas of the users A to C that are associated targets.

Specifically, a color and a pattern of the balloon image of the message "Is it just my imagination that it sounds like it's just as if it was nothing to do with him?" are the same as the color and the pattern of the display area of the user C. This indicates that the message " Is it just my imagination that it sounds like it's just as if it was nothing to do with him?" of the user B is associated with the message of the user C.

Further, a color and a pattern of the balloon image of the message "It's just your imagination" of the user A are the same as the color and the pattern of the display area of the user B. This indicates that the message "It's just your imagination" of the user A is associated with the message of the user B.

Further, a color and a pattern of the balloon image of the message "I agree with you" of the user C is the same as the color and pattern of the display area of the user A. This indicates that the message "I agree with you" of the user C is associated with the message of the user A.

Thus, since the color and the pattern of the balloon image is the same as the color and the pattern of the display area assigned to each user, it is possible to indicate that the posted message is associated with the user. Further, since the messages are displayed in time-series based on posted time, it is possible to indicate that the message is associated with the message having a closer posted time among the messages posted in the past by the associated user. Accordingly, a user viewing the posting display screen illustrated in FIG. 7 can intuitively recognize that the series of messages, "Life has good times and bad times" → "Is it just my imagination that it sounds like it's just as if it was nothing to do with him?" → "It's just your imagination" → "I agree with you" is based on associated topics.

In contrast, the message "We just talked about that" of the user A and the message "Come to think of it, are you busy tomorrow?" of the user C are displayed on the balloon image shown with the color and the pattern (for example, plain white) different from the color and the pattern of the display area of any user. This indicates that these messages are not associated with any message. Therefore, the user viewing the posting display screen illustrated in FIG. 7 can intuitively recognize that these messages are associated with new topics.

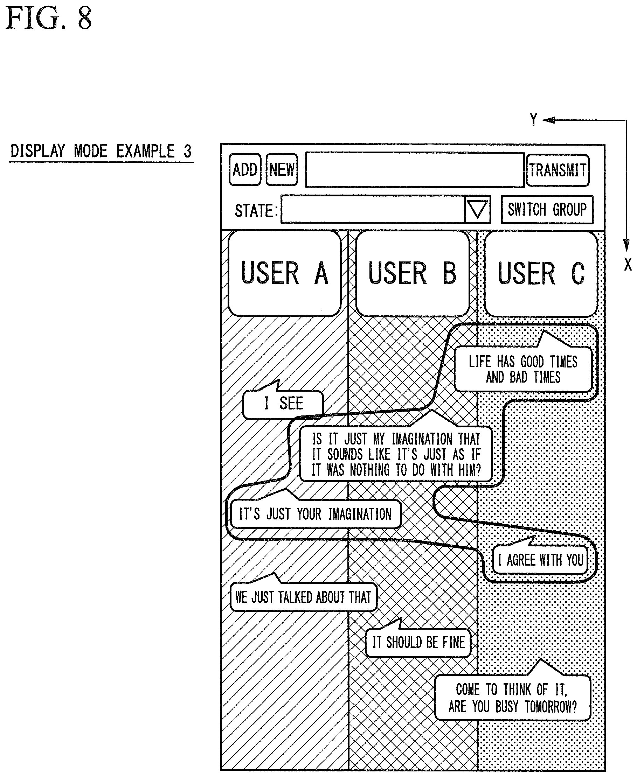

Next, display mode example 3 in accordance with the present exemplary embodiment will be described with reference to FIG. 8. FIG. 8 is a diagram illustrating an example of a display screen of display mode example 3 in accordance with the present exemplary embodiment.

This display mode example 3 is a display mode in which a link line that surrounds a balloon image displaying the input data that is an associated target and a balloon image displaying the input data that is an associating target is displayed when the input data (the associating target) received by the input unit 111 is shown to be associated with the input data that is the associated target in the display area of the display unit 112.

Further, display mode example 3 is a display mode in which a link line that surrounds a balloon image displaying latest input data displayed in the display area which is an associated target and the balloon image displaying the input data that is an associating target is displayed when the input data (the associating target) received by the input unit 111 is shown to be associated with the input data that is the associated target in the display area of the display unit 112.

In display mode example 3, similarly, the posted message is displayed in the balloon image, the display areas assigned to the users A to C are displayed in a lowermost layer of the display screen, and message are displayed in an order of posted time, as described with reference to FIGS. 6 and 7. Here, a difference from display mode examples 1 and 2 will be mainly described. Display mode example 3 is different from display mode examples 1 and 2 in that the balloon images of a series of associated messages are surrounded by the link line.

Specifically, a balloon image of the message "Life has good times and bad times" of the user C, a balloon image of the message "Is it just my imagination that it sounds like it's just as if it was nothing to do with him?" of the user B, a balloon image of the message "It's just your imagination" of the user A, and a balloon image of the message "I agree with you" of the user C are surrounded by an annular link line. This indicates that these messages are a series of messages associated with each other.

Further, since the messages are displayed in time-series based on posted time, it is possible to indicate that the messages are associated with the message posted in the past by the associated user. Accordingly, a user viewing the posting display screen illustrated in FIG. 8 can intuitively recognize that the series of sequentially posted messages, "Life has good times and bad times" → "Is it just my imagination that it sounds like it's just as if it was nothing to do with him?" → "It's just your imagination" → "I agree with you" is based on associated topics.

In contrast, the message "We just talked about that" of the user A and the message "Come to think of it, are you busy tomorrow?" of the user C are displayed outside of the annular link line. This indicates that the messages are not associated with any message. Therefore, the user viewing the posting display screen illustrated in FIG. 8 can intuitively recognize that the messages are associated with new topics.

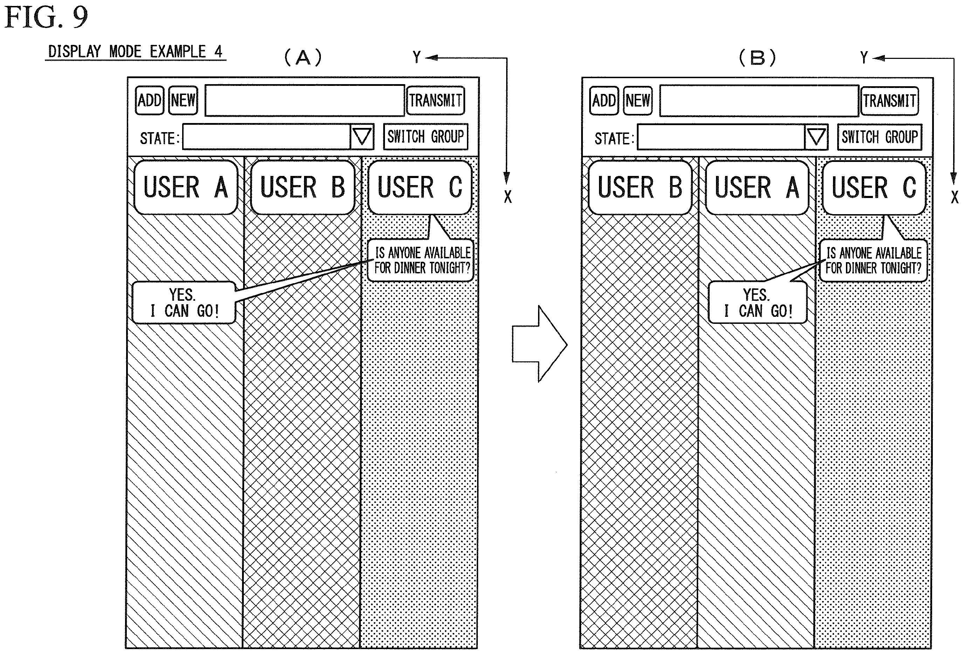

Next, display mode example 4 in accordance with the present exemplary embodiment will be described with reference to FIG. 9. FIG. 9 is a diagram illustrating an example of a posting display screen of display mode example 4 in accordance with the present exemplary embodiment.

This display mode example 4 is a display mode in which a display area in which the input data that is an associating target is displayed is displayed next to a display area in which the input data that is an associated target is displayed when the input data (the associating target) received by the input unit 111 is shown to be associated with the input data that is the associated target in the display area of the display unit 112.

Further, display mode example 4 is a display mode in which a display area in which the input data that is an associating target is displayed is displayed next to a display area that is an associated target when the input data (the associating target) received by the input unit 111 is shown to be associated with the input data that is the associated target in the display area of the display unit 112.

It is to be noted that in display mode example 4, similarly, the posted message is displayed in the balloon image, the display areas assigned to the users A to C are displayed in a lowermost layer of the display screen, messages are displayed in an order of posted time, and the lead line portion is in contact with the balloon image of the message that is an associated target, as described with reference to FIG. 6. Here, a difference from display mode example 1 will be mainly described. Display mode example 4 is different from display mode example 1 in that an order of arrangement in the Y-axis direction of the display areas assigned to the users is changed in accordance with the users posting the associated messages.

Specifically, a message "Is anyone available for dinner tonight?" is assumed to be posted by the user C. In this case, a balloon image showing the message "Is anyone available for dinner tonight?" is displayed in the display area of the user C.

Then, a message "Yes. I can go!" is assumed to be posted by the user A in association with the message "Is anyone available for dinner tonight?" of the user C. In this case, a balloon image displaying the message "Yes. I can go!" is displayed in the display area of the user A.

Here, in the case of display mode example 1, the lead line portion of the balloon image displaying the message "Yes. I can go!" is displayed in contact with the balloon image displaying the message "Is anyone available for dinner tonight?" to indicate that these messages are associated, as illustrated in FIG. 9(A). However, since the display area of the user B is displayed between the display area of the user A and the display area of the user C, the lead line portion of the balloon image showing the message "Yes. I can go!" is displayed across the display area of the user B.

In display mode example 4 in accordance with the present exemplary embodiment, the lead line portion of the balloon image displaying the message "Yes. I can go!" is displayed in contact with the balloon image displaying the message "Is anyone available for dinner tonight?" and the display area of the user A is moved next to the display area of the user C, as illustrated in FIG. 9(B). Accordingly, the display area of the user A and the display area of the user C are close to each other, and the distance between the message "Is anyone available for dinner tonight?" of the user C and the message "Yes. I can go!" of the user A is short. Accordingly, a user viewing the posting display screen illustrated in FIG. 9(B) can intuitively recognize that the series of messages "Is anyone available for dinner tonight?" → "Yes. I can go!" is based on an associated topic.

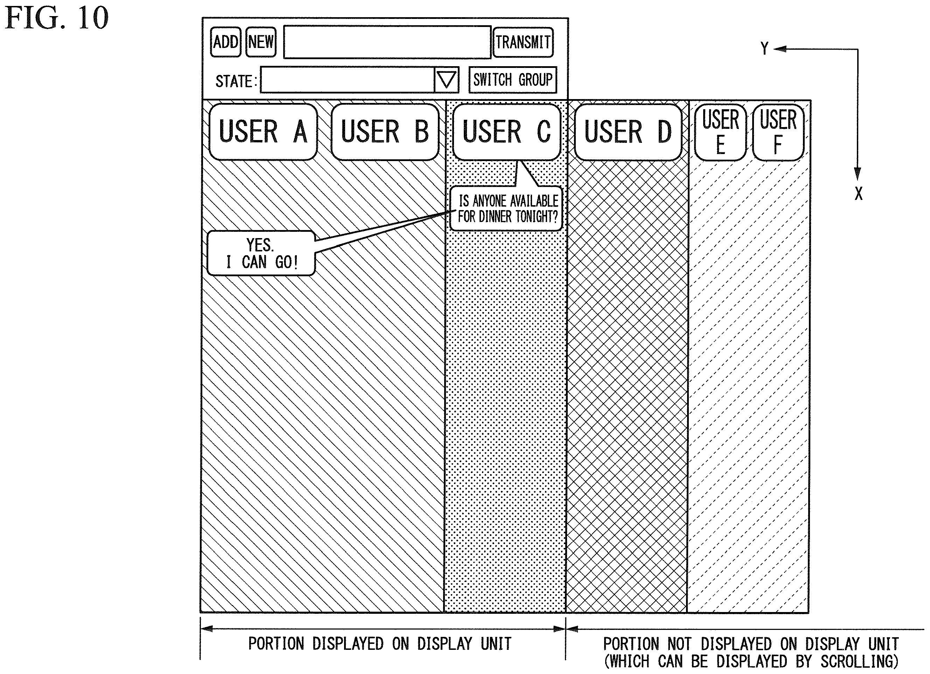

It is to be noted that the posting display screen in accordance with the present exemplary embodiment may be a posting display screen in which two or more users are assigned to one display area as illustrated in FIG. 10, and an image of a portion not included in the screen of the display unit 112 of the touch panel 101 may be displayed based on, for example, a sliding operation input through the input unit 111.

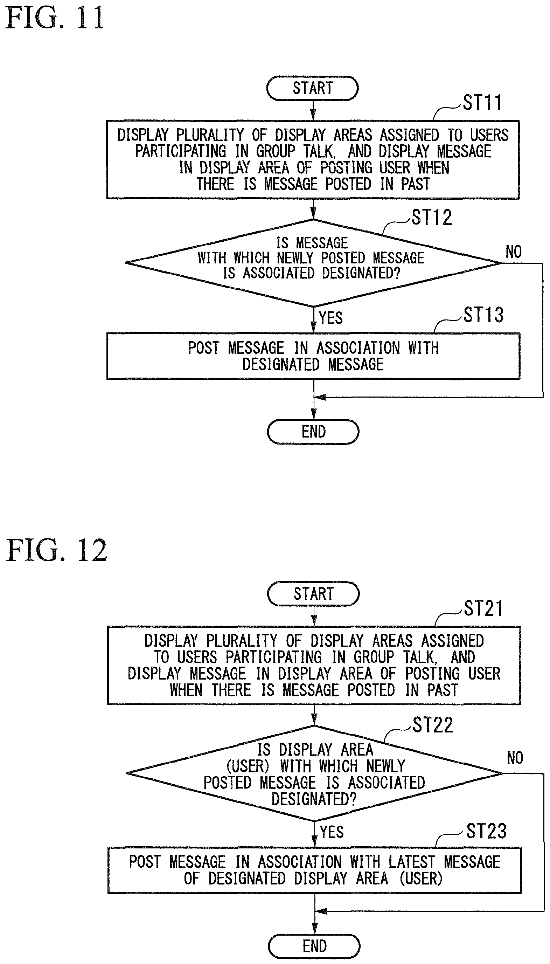

Next, an example of a method for associating a message that is an associating target with a message that is an associated target will be described with reference to FIG. 11. FIG. 11 is a flowchart describing an example of a method for associating a message that is an associating target with a message that is an associated target. It is to be noted that, the description here will be given in detail using an example of a method for associating the message "Is it just my imagination that it sounds like it's just as if it was nothing to do with him?" of the user B with the message "Life has good times and bad times" of the user C in display mode examples 1 to 3 described with reference to FIGS. 6 to 8.

### (Step ST11)

The user terminal 3 is instructed to view the talk room of a designated group by the user B via the input unit 111. Then, the user terminal 3 transmits a transmission request for a posting display screen of the talk room of the designated group to the posting information management server 2 via the communication unit 103. When the posting information management server 2 receives this transmission request for a posting display screen, the posting information management server 2 creates a posting screen with reference to the storage unit 204.

In the present exemplary embodiment, it is assumed that the users A to C participate in the talk room of the designated group, and the message "Life has good times and bad times" of the user C and the message "I see" of the user A are posted.

Thus, the image generation unit 222 of the posting information management server 2 creates an image in which the display areas of the users A to C participating in the talk room of the designated group are a lowermost layer of the display screen. Then, the image generation unit 222 creates data of the posting display screen for displaying the balloon image including the message "Life has good times and bad times" of the user C in the display area of the user C, and the balloon image including the message "I see" of the user A in the display area of the user A so that the messages are displayed at shifted positions in the X-axis direction in accordance with posted times.

The image generation unit 222 transmits the created data of the posting display screen to the user terminals 1, 3, and 4 via the communication unit 203.

Thus, the user terminal 3 displays the posting display screen on the display unit 112 based on the received data of the posting display screen. That is, the display unit 112 displays the balloon image including the message "Life has good times and bad times" of the user C in the display area of the user C, and the balloon image including the message "I see" of the user A in the display area of the user A o that the messages are displayed at the shifted positions in the X-axis direction in accordance with the posted times.

### (Step ST12)

Then, when the posting unit 123 of the user terminal 3 is instructed to post the message input through an input field displayed on the touch panel 101, the posting unit 123 determines whether the association destination with which the posted message is associated has been designated. Here, the posting unit 123 determines whether the message has been designated as the association destination with which the posted message is associated.

A case in which it is determined that the message has been designated as the association destination with which the posted message is associated is, for example, a case in which a long tap or touch operation is performed on a balloon image of the message that is an associated target when posting of the message is instructed.

### (Step ST13)

Here, it is assumed that when the user B posts a message "Is it just my imagination that it sounds like it's just as if it was nothing to do with him?", a long tap or touch operation is performed on the balloon image of the message "Life has good times and bad times" of the user C.

In this case, the posting unit 123 creates association information indicating the message (that is, the message "Life has good times and bad times" of the user C) that is a designated association destination, associates the created association information with the message "Is it just my imagination that it sounds like it's just as if it was nothing to do with him?" and transmits them to the posting information management server 2.

Accordingly, when writing the message "Is it just my imagination that it sounds like it's just as if it was nothing to do with him?" to the posting information table, the registration unit 221 of the posting information management server 2 writes the association information indicating the message (that is, the message "Life has good times and bad times" of the user C) that is the designated association destination in association with the above message.

Further, the image generation unit 222 of the posting information management server 2 creates a posting display screen obtained by adding the message "Is it just my imagination that it sounds like it's just as if it was nothing to do with him?" of the user B to the posting display screen created in step ST11 in a display mode indicating that this message is associated with the message "Life has good times and bad times" of the user C. For example, the image generation unit 222 creates the posting display screen in accordance with any one display mode example among the display mode examples 1 to 4.

Then, the posting information management server 2 transmits data of the created posting display screen to the user terminal 3, and the user terminal 3 displays the posting display screen based on the received data.

Thus, the posting display screen for displaying the posted message that is an associating target in association with the message that is an associated target can be displayed on the user terminal 3.

Next, an example of a method for associating a message that is an associating target with the display area (user) that is an associated target will be described with reference to FIG. 12. FIG. 12 is a flowchart illustrating the example of the method for associating a message that is an associating target with the display area (user) that is an associated target. It is to be noted that the description here will be given in detail using an example of a method for associating the message "Is it just my imagination that it sounds like it's just as if it was nothing to do with him?" of the user B with the message "Life has good times and bad times" of the user C in display mode examples 1 to 3 described with reference to FIGS. 6 to 8.

### (Step ST21)

Since this step is the same process as step ST11 described above, a detailed description will be omitted.

### (Step ST22)

Then, when the posting unit 123 of the user terminal 3 is instructed to post the message input through an input field displayed on the touch panel 101, the posting unit 123 determines whether the association destination with which the posted message is associated has been designated. Here, the posting unit 123 determines whether the display area (the user) has been designated as the association destination with which the posted message is associated.

A case in which it is determined that the display area (the user) has been designated as the association destination with which the posted message is associated is, for example, a case in which a long tap or touch operation is performed on the display area or an icon of a user name that is an associated target when posting of the message is instructed.

### (Step ST23)

Here, it is assumed that a long tap or touch operation is performed on the display area of the user C when posting the message "Is it just my imagination that it sounds like it's just as if it was nothing to do with him?"

In this case, the posting unit 123 creates association information indicating a message (that is, the user C) that is the designated association destination, associates the created association information with the message "Is it just my imagination that it sounds like it's just as if it was nothing to do with him?" and transmits them to the posting information management server 2.

Accordingly, when writing the message "Is it just my imagination that it sounds like it's just as if it was nothing to do with him?" to the posting information table, the registration unit 221 of the posting information management server 2 writes the association information indicating the message (that is, the user C) that is the designated association destination in association with the above message.

Further, the image generation unit 222 of the posting information management server 2 creates a posting display screen obtained by adding the message "Is it just my imagination that it sounds like it's just as if it was nothing to do with him?" of the user B to the posting display screen created in step ST21 in a display mode indicating that this message is associated with the user C. For example, the image generation unit 222 creates the posting display screen in accordance with any one display mode example among display mode examples 1 to 4. It is to be noted that the message of the association destination is not specified here, and thus the image generation unit 222 may create the posting display screen in the display mode associated with the latest message of the user of the association destination.

Then, the posting information management server 2 transmits data of the created posting display screen to the user terminal 3, and the user terminal 3 displays the posting display screen based on the received data.

Thus, the posting display screen for displaying the posted message that is an associating target in association with the message that is an associated target can be displayed on the user terminal 3.

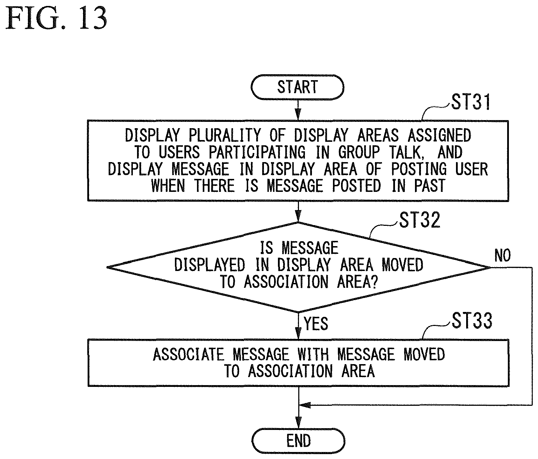

Next, an example of a method for associating a message that is an associating target moved to a predetermined association display area with a message that is an associated target will be described with reference to FIG. 13. FIG. 13 is a flowchart describing the example of the method for associating a message that is an associating target with the message that is an associated target. It is to be noted that the description here will be given in detail using an example of a method for associating the message "Is it just my imagination that it sounds like it's just as if it was nothing to do with him?" of the user B with the message "Life has good times and bad times" of the user C in display mode examples 1 to 3 described with reference to FIGS. 6 to 8.

### (Step ST31)

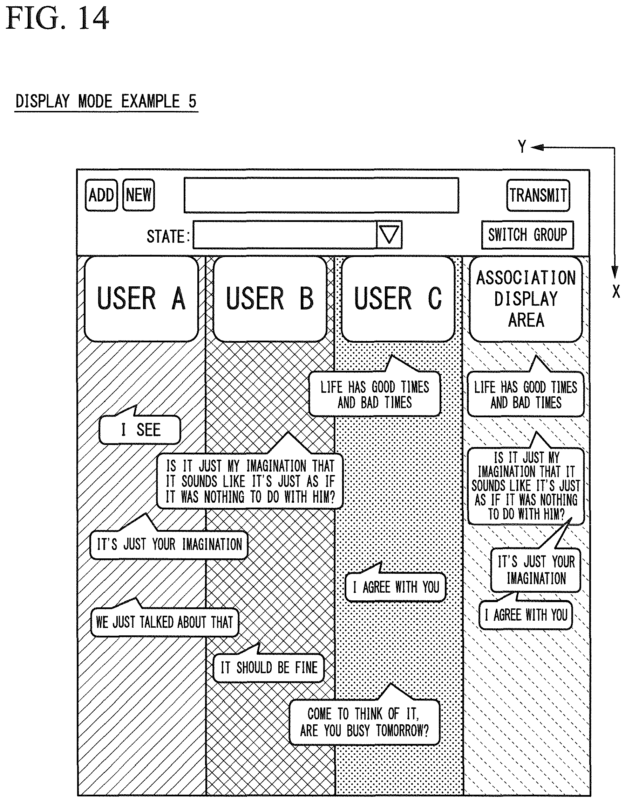

A detailed description of the same process as step ST11 described above will be omitted. It is to be noted that a difference from the display mode examples described above will be described. The difference from the display mode examples described above is that the image generation unit 222 of the posting information management server 2 creates a posting image including the association display area as illustrated in FIG. 14. FIG. 14 illustrates an example (display mode example 5) of the posting display screen created here. As illustrated in FIG. 14, the association display area is displayed alongside the display areas of the users in the Y-axis direction. This association display area is a display area for displaying associated messages. In this association display area, the messages are sequentially displayed from top to bottom in accordance with posted times, similar to the display areas of the users.

### (Step ST32)

Then, the posting unit 123 of the user terminal 3 determines whether the association destination with which the posted message is associated is designated. Here, the posting unit 123 determines whether the posted message is moved to the association display area, for example, as a result of a drag and drop operation.

### (Step ST33)

Here, it is assumed that the message "Is it just my imagination that it sounds like it's just as if it was nothing to do with him?" of the user B has already been posted. It is also assumed that this message "Is it just my imagination that it sounds like it's just as if it was nothing to do with him?" of the user B has been moved to the association display area as a result of a drag and drop operation.

In this case, the posting unit 123 creates association information indicating that the designated association destination is the association display area, associates the created association information with the message "Is it just my imagination that it sounds like it's just as if it was nothing to do with him?", and transmits them to the posting information management server 2.

Accordingly, when writing the message "Is it just my imagination that it sounds like it's just as if it was nothing to do with him?" to the posting information table, the registration unit 221 of the posting information management server 2 writes the association information indicating the association display area that is the designated association destination in association with this message.

It is to be noted that it is assumed that the message "Life has good times and bad times" of the user C has already been moved to the association display area as a result of a drag and drop operation of the user B.

In this case, the image generation unit 222 of the posting information management server 2 creates a posting display screen obtained by adding the message "Is it just my imagination that it sounds like it's just as if it was nothing to do with him?" of the user B to the posting display screen created in step ST31 in a display mode indicating that this message is associated with another message displayed in the association display area (that is, the message "Life has good times and bad times" of the user C). For example, the image generation unit 222 creates the posting display screen in accordance with any one display mode example among display mode examples 1 to 4. It is to be noted that the message of the association destination is not specified here, and thus the image generation unit 222 may create the posting display screen in the display mode associated with the latest message displayed in the association display area of the association destination. Further, the image generation unit 222 may display the messages that are associating targets in the association display area, and display the messages in the display areas of the users without associating the messages.

Then, the posting information management server 2 transmits data of the created posting display screen to the user terminal 3, and the user terminal 3 displays the posting display screen based on the received data.

Thus, the posting display screen for displaying the posted message that is an associating target in association with the message that is an associated target can be displayed on the user terminal 3.

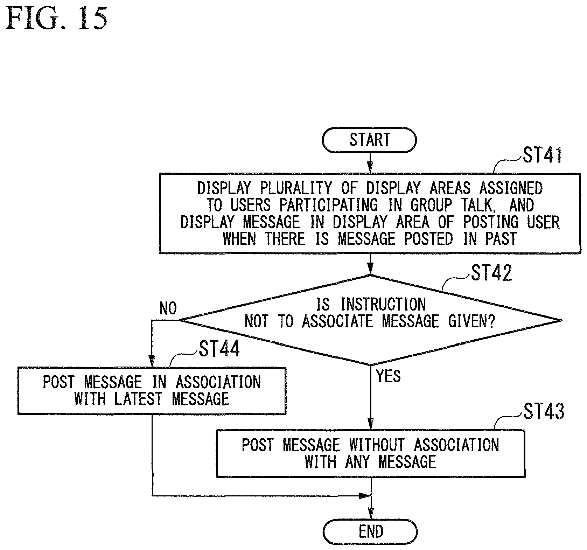

Next, an example of a method for associating a message that is an associating target moved to a predetermined association display area with a message that is an associated target will be described with reference to FIG. 15. FIG. 15 is a flowchart describing the example of the method for associating a message that is an associating target with the message that is an associated target. It is to be noted that the description here will be given in detail using an example of a method for associating the message "Is it just my imagination that it sounds like it's just as if it was nothing to do with him?" of the user B with the message "Life has good times and bad times" of the user C in display mode examples 1 to 3 described with reference to FIGS. 6 to 8.

### (Step ST41)

Since this step is the same process as step ST11 described above, a detailed description will be omitted.

### (Step ST42)

Then, when the posting unit 123 of the user terminal 3 is instructed to post the message input through an input field displayed on the touch panel 101, the posting unit 123 determines whether no association of the posted message has been designated. Here, the posting unit 123 determines whether the user has executed an operation to actively instruct no association of messages. For example, when an operation button "New" is displayed on the posting display screen, the posting unit 123 determines whether the operation button "New" has been touched when posting the message input through the input field displayed on the touch panel 101.

Further, when the posting unit 123 is instructed to post the message input through the input field displayed on the touch panel 101, the posting unit 123 determines whether text indicating absence of an associating target is included in the posted message. For example, when a connective indicating that content of conversation is changed, such as "By the way", "Come to think of it", or "Although there is no relation", is included in the posted message, the posting unit 123 determines that the text indicating absence of an associating target is included.

### (Step ST43)

When it is determined that no association of the posted message is designated and, for example, when it is determined that the operation button "New" is touched, the posting unit 123 posts the message without association with any message. That is, when the posting unit 123 transmits the message to the posting information management server 2, the posting unit 123 posts the message without associating the association information.

### (Step ST44)

In contrast, when it is determined that no association of the posted message is not designated and, for example, when it is determined that the operation button "New" is not touched, the posting unit 123 associates the posted message with a latest message.

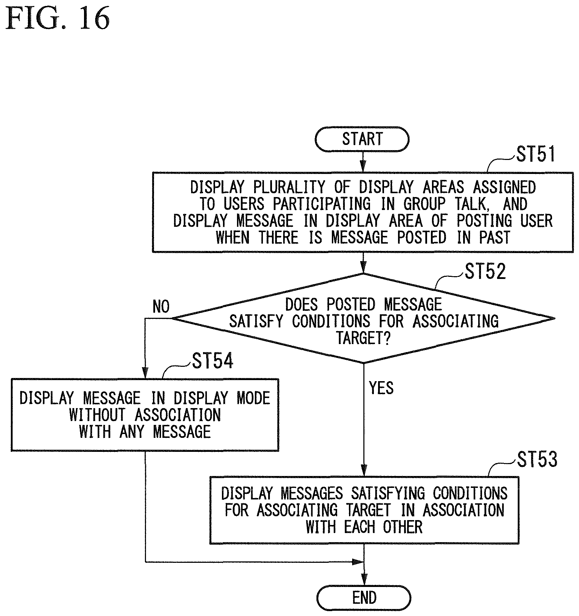

Next, an example of a method for associating a message that is an associating target with a message that is an associated target will be described with reference to FIG. 16. FIG. 16 is a flowchart describing the example of a method for associating a message that is an associating target with a message that is an associated target.

### (Step ST51)

Since this step is the same process as step ST11 described above, a detailed description will be omitted.

### (Step ST52)

Then, when the posting unit 123 of the user terminal 3 is instructed to post the message input through an input field displayed on the touch panel 101, the posting unit 123 determines whether the association destination with which the posted message is associated has been designated. Here, it is assumed that the association destination with which the posted message is associated is not designated. The user terminal 3 transmits the message to the posting information management server 2 without attaching the association information to the posted message.

The posting information management server 2 analyzes text information included in the received message to determine whether the same text as is the text information included in the posted message obtained as a result of the analysis is included in a message posted in the past within the talk room in which the message is posted. That is, the posting information management server 2 determines whether the posted message satisfies the conditions for the associating target.

### (Step ST53)

Then, for example, when the same or similar place name, personal name, name of an organization, work title, or other frequent keyword is included in a message posted in the past within a predetermined period and a message posted at a present time point, the posting information management server 2 determines that both satisfy the conditions for the associating target. Then, the posting information management server 2 creates data of the posting display screen in which the messages satisfying the conditions for the associating target are associated with each other, and transmits the data to the user terminals 1, 3, and 4. Thus, the user terminals 1, 3, and 4 display the posting display screen in which the messages satisfying the conditions for the associating target are associated with each other in a display mode, such as one of the display mode examples 1 to 3, based on the data of the posting display screen received from the posting information management server 2.

### (Step ST54)

In contrast, when the same or similar place name, personal name, name of an organization, work title, or other frequent keyword that is not included in a message posted in the past within a predetermined period and a message posted at a present time point, the posting information management server 2 determines that neither satisfies the conditions for the associating target. Then, the posting information management server 2 creates data of the posting display screen in which the message that does not satisfy the conditions is not associated, and transmits the data to the user terminals 1, 3, and 4. Thus, the user terminals 1, 3, and 4 display the posting display screen based on the data of the posting display screen received from the posting information management server 2.

It is to be noted that the user terminals 1, 3, and 4 and the posting information management server 2 in accordance with the present exemplary embodiment include a computer system therein. Moreover, steps of an operation is stored in a format of a program in a computer-readable recording medium, and the above-described processing is performed as a result of the computer system reading and executing this program. The "computer system" referred to here includes a CPU, various memories, an operating system (OS), and hardware such as a peripheral device.

Further, the "computer system" includes a homepage providing environment (or display environment) if a World Wide Web (WWW) system is being used.

Further, a program for realizing a function of each step may be recorded in a computer-readable recording medium, and the program recorded on the recording medium may be loaded and executed by the computer system,.

Further, the "computer-readable recording medium" refers to a portable medium such as a flexible disk, a magneto-optical disc, a read only memory (ROM), a writable nonvolatile memory such as a flash memory, or a CD (Compact Disc)-ROM, or a storage device such as a hard disk built in a computer system.

Further, the "computer-readable recording medium" also includes a recording medium that holds a program for a constant time, such as a volatile memory (e.g., a dynamic random access memory (DRAM)) inside a computer system that functions as a server or a client when a program is transmitted over a network such as the Internet or a communication line such as a telephone line.

Further, the above-described program may be transmitted from a computer in which the program is stored in a storage device or the like to another computer system via a transmission medium or by transmission waves in the transmission medium. Here, the "transmission medium" for transmitting the program refers to a medium having a function of transmitting information, such as a network (communication network) such as the Internet or a communication circuit (communication line) such as a telephone circuit.

Further, the above-described program may be a program for realizing part of the above-described functions. Moreover, the program may be a program capable of realizing the above-described functions in combination with a program previously stored in a computer system, i.e., a so-called differential file (a differential program).

In addition, the structural elements of the above-described exemplary embodiments can be appropriately replaced with known structural elements without departing from the gist of the present invention. Further, the technical scope of the present invention is not limited to the above exemplary embodiments.

### INDUSTRIAL APPLICABILITY

The present invention can be applied to, for example, a chat system. The present invention can prevent a latest message associated with a message posted in the past from being overlooked by a user.

### Description of Reference Signs

1 User terminal
2 Posting information management server
3 User terminal
4 User terminal
5 Wireless communication network
6 Internet
101 Touch panel
111 Input unit
112 Display unit
102 Control unit
121 Operation content determination unit
122 Display control unit
123 Posting unit
103 Communication unit
104 Storage unit
201 Input unit
202 Control unit
221 Registration unit
222 Image generation unit
203 Communication unit
204 Storage unit

## Claims

1. A display control device comprising:
an input unit (111) that receives input data that is input by a user (A, B, C);
a display unit (112) that includes a plurality of display areas in which the input data is displayed, and displays the input data from the user in a display area assigned to the user; and
a display control unit (122)
configured, (i) when a new input data input by the user and at least one of posted input data and one of the display areas already displayed on the display unit (112) are designated by the user to be associated with each other, and the new input data is designated by the user to be displayed on the display unit (112), or
(ii) when the new input data input by the user and the posted input data displayed on the display unit (112) satisfy a predetermined condition,
to set the new input data input by the user as an associating target that is to be associated with at least one of the posted input data and the display area displayed on the display unit (112),
the display control unit (122) being further configured to:
cause the new input data that is the associating target to be displayed in a time series in a predetermined direction in the display area assigned to the user in a display mode indicating that the new input data that is the associating target is associated with at least one of the posted input data displayed on the display unit (112) and the display area; and
display the new input data input by the user and set as other than the associating target in at least one of the display areas, **characterized in that**
when the new input data that is the associating target is shown to be associated with the posted input data that is an associated target, the display control unit (122) causes the new input data that is the associating target to be displayed in any one of:
(i) a first display mode in which a balloon image displaying the new input data that is the associating target is linked to a balloon image displaying the posted input data that is the associated target;
(ii) a second display mode in which the new input data that is the associating target is displayed in a balloon image in the same style as the display area in which the posted input data that is the associated target is displayed;
(iii) a third display mode in which a link line that surrounds the balloon image displaying the posted input data that is the associated target and the balloon image displaying the new input data that is the associating target is displayed; and
(iv) a fourth display mode in which the display area in which the new input data that is the associating target is displayed is displayed next to the display area in which the posted input data that is the associated target is displayed.

2. The display control device according to claim 1, wherein the display control unit (122) causes the new input data that is the associating target to be displayed in the display area in a display mode indicating that the new input data that is the associating target is associated with the posted input data or the display area designated by the user among the input data displayed on the display unit (112) and the display areas.

3. The display control device according to claim 1, wherein, when the new input data that is the associating target displayed in the display area is moved to an association display area determined in advance as an area in a display screen for associating the input data with each other, the display control unit (122) causes the new input data moved to the association display area to be displayed in at least one of the association display area and the display area in a mode in which the new input data moved to the association display area is associated with other input data moved to the association display area.

4. The display control device according to claim 1, wherein, when the input data received by the input unit (111) satisfies conditions for the associating target, the display control unit (122) causes the input data satisfying the conditions for the associating target to be displayed in the display area in a display mode indicating that the input data satisfying the conditions for the associating target is associated with each other.

5. The display control device according to claim 4, wherein, when common text is included in the input data, the display control unit (122) causes the input data in the display area to be displayed in a display mode indicating that the input data including the common text is associated with each other.

6. The display control device according to claim 1, wherein the display control unit (122) causes the new input data that is the associating target in the display area to be displayed in a display mode indicating that the new input data that is the associating target is associated with latest input data or a display area in which the latest input data is displayed among the posted input data displayed on the display unit (112) and the display areas.

7. The display control device according to claim 1 or 6, wherein, if the input unit (111) receives an instruction indicating that the received input data is not to be associated with other input data when receiving the input data,
the display control unit (122) causes the input data received by the input unit (111) to be displayed in a display area assigned to the user receiving the input data in a display mode indicating that the input data received by the input unit (111) is not associated with the other input data displayed on the display unit (112).

8. A display control method comprising:
receiving input data that is input by a user (A, B, C);
displaying the input data from the user in a display area assigned to the user among a plurality of display areas in which the input data is displayed;
(i) when a new input data input by the user and at least one of posted input data and one of the display areas already displayed on the display unit (112) are designated by the user to be associated with each other and the new input data is designated by the user to be displayed on the display unit (112), or
(ii) when the new input data input by the user and the posted input data displayed on the display unit (112) satisfy a predetermined condition,
setting the new input data input by the user as an associating target that is to be associated with at least one of the posted input data and the display area displayed on the display unit (112);
causing the new input data that is the associating target to be displayed in a time series in a predetermined direction in the display area assigned to the user in a display mode indicating that the new input data that is the associating target is associated with at least one of the posted input data displayed in the display area and the display area, and
displaying the new input data input by the user and set as other than the associating target in at least one of the display areas,
**characterized in that**
when the new input data that is the associating target is shown to be associated with the posted input data that is an associated target, the display control unit (122), display control method further comprising causing the new input data that is the associating target to be displayed in any one of:
(i) a first display mode in which a balloon image displaying the new input data that is the associating target is linked to a balloon image displaying the posted input data that is the associated target;
(ii) a second display mode in which the new input data that is the associating target is displayed in a balloon image in the same style as the display area in which the posted input data that is the associated target is displayed;
(iii) a third display mode in which a link line that surrounds the balloon image displaying the posted input data that is the associated target and the balloon image displaying the new input data that is the associating target is displayed; and
(iv) a fourth display mode in which the display area in which the new input data that is the associating target is displayed is displayed next to the display area in which the posted input data that is the associated target is displayed.

9. A program for causing a computer to function as:
an input unit (111) that receives input data that is input by a user (A, B, C);
a display unit (112) that includes a plurality of display areas in which the input data is displayed, and displays the input data from the user in a display area assigned to the user; and
a display control unit (122) that sets,
(i) when a new input data input by the user and at least one of posted input data and one of the display areas already displayed on the display unit (112) are designated by the user to be associated with each other and the new input data is designated by the user to be displayed on the display unit (112), or
(ii) when the new input data input by the user and the posted input data displayed on the display unit (112) satisfy a predetermined condition,
the new input data input by the user as an associating target that is to be associated with at least one of the posted input data and the display area displayed on the display unit (112),
the display control unit (122) further
causes the new input data that is the associating target to be displayed in a time series in a predetermined direction in the display area assigned to the user in a display mode indicating that the new input data that is the associating target is associated with at least one of the posted input data displayed on the display unit (112) and the display area, and
displays the other input data relating to a topic that is different from a topic relating to the new input data input by the user in at least one of the display areas,
**characterized in that**
when the new input data that is the associating target is shown to be associated with the posted input data that is an associated target, the display control unit (122) causes the new input data that is the associating target to be displayed in any one of:
(i) a first display mode in which a balloon image displaying the new input data that is the associating target is linked to a balloon image displaying the posted input data that is the associated target;
(ii) a second display mode in which the new input data that is the associating target is displayed in a balloon image in the same style as the display area in which the posted input data that is the associated target is displayed;
(iii) a third display mode in which a link line that surrounds the balloon image displaying the posted input data that is the associated target and the balloon image displaying the new input data that is the associating target is displayed; and
(iv) a fourth display mode in which the display area in which the new input data that is the associating target is displayed is displayed next to the display area in which the posted input data that is the associated target is displayed.

## Patentansprüche

1. Anzeigesteuervorrichtung mit:
einer Eingabeeinheit (111), die Eingabedatenelemente empfängt, die durch einen Benutzer (A, B, C) eingegeben werden;
einer Anzeigeeinheit (112), die mehrere Anzeigebereiche aufweist, in denen die Eingabedatenelemente angezeigt werden, und die Eingabedatenelemente vom Benutzer in einem dem Benutzer zugewiesenen Anzeigebereich anzeigt; und
einer Anzeigesteuereinheit (122), die dafür konfiguriert ist,
(i) wenn ein durch den Benutzer eingegebenes neues Eingabedatenelement und mindestens eines von geposteten Eingabedatenelementen und mindestens einer der Anzeigebereiche, die bereits auf der Anzeigeeinheit (112) angezeigt werden, durch den Benutzer als einander zugewiesen spezifiziert sind und das neue Eingabedatenelement durch den Benutzer dafür spezifiziert ist, auf der Anzeigeeinheit (112) angezeigt zu werden, oder
(ii) wenn das durch den Benutzer eingegebene neue Eingabedatenelement und die geposteten Eingabedatenelemente, die auf der Anzeigeeinheit (112) angezeigt werden, eine vorgegebene Bedingung erfüllen,
das durch den Benutzer eingegebene neue Eingabedatenelement als ein Zuordnungsziel zu setzen, das dem mindestens einen geposteten Eingabedatenelement und dem mindestens einen Anzeigebereich zugeordnet werden soll, die auf der Anzeigeeinheit (112) angezeigt werden,
wobei die Anzeigesteuereinheit (122) ferner dafür konfiguriert ist:
zu veranlassen, dass das neue Eingabedatenelement, das das Zuordnungsziel ist, in einer Zeitfolge in einer vorgegebenen Richtung in dem Anzeigebereich, der dem Benutzer zugewiesen ist, in einem Anzeigemodus dargestellt wird, der anzeigt, dass das neue Eingabedatenelement, das das Zuordnungsziel sind, dem mindestens einen auf der Anzeigeeinheit (112) angezeigten geposteten Eingabedatenelement und dem Anzeigebereich zugeordnet ist; und
das durch den Benutzer eingegebene neue Eingabedatenelement, das als ein vom Zuordnungsziel verschiedenes Eingabedatenelement gesetzt ist, in mindestens einem der Anzeigebereiche darzustellen,
**dadurch gekennzeichnet, dass**,
wenn sich zeigt, dass das neue Eingabedatenelement, das das Zuordnungsziel ist, einem geposteten Eingabedatenelement zugeordnet ist, das ein zugeordnetes Ziel ist, die Anzeigesteuereinheit (122) veranlasst, dass das neue Eingabedatenelement, das das Zuordnungsziel ist, in einem Modus dargestellt wird unter:
(i) einem ersten Anzeigemodus, in dem ein Sprechblasenbild, das das neue Eingabedatenelement anzeigt, das das Zuordnungsziel ist, mit einem Sprechblasenbild verbunden ist, das ein gepostetes Eingabedatenelement anzeigt, das das zugeordnete Ziel ist;
(ii) einem zweiten Anzeigemodus, in dem das neue Eingabedatenelement, das das Zuordnungsziel ist, in einem Sprechblasenbild im gleichen Stil wie im Anzeigebereich dargestellt wird, in dem ein gepostetes Eingabedatenelement angezeigt wird, das das zugeordnete Ziel ist;
(iii) einem dritten Anzeigemodus, in dem eine Verbindungslinie, die das Sprechblasenbild, das ein gepostetes Eingabedatenelement anzeigt, das das zugeordnete Ziel ist, umgibt, und das Sprechblasenbild, das das neue Eingabedatenelement anzeigt, das das Zuordnungsziel ist, angezeigt wird; und
(iv) einem vierten Anzeigemodus, in dem der Anzeigebereich, in dem das neue Eingabedatenelement, das das Zuordnungsziel ist, neben dem Anzeigebereich angezeigt wird, in dem ein gepostetes Eingabedatenelement angezeigt wird, das das zugeordnete Ziel ist.

2. Anzeigesteuervorrichtung nach Anspruch 1, wobei die Anzeigesteuereinheit (122) veranlasst, dass das neue Eingabedatenelement, das das Zuordnungsziel ist, im Anzeigebereich in einem Anzeigemodus dargestellt wird, der anzeigt, dass das neue Eingabedatenelement, das das Zuordnungsziel sind, mindestens einem geposteten Eingabedatenelement oder einem Anzeigebereich zugeordnet ist, die durch den Benutzer unter den auf der Anzeigeeinheit (112) angezeigten Eingabedatenelementen und Anzeigebereichen spezifiziert sind.

3. Anzeigesteuervorrichtung nach Anspruch 1, wobei, wenn das neue Eingabedatenelement, das das im Anzeigebereich angezeigte Zuordnungsziel ist, zu einem Zuordnungsanzeigebereich bewegt wird, der im Voraus als ein Bereich in einem Anzeigebildschirm zum Zuordnen der Eingabedatenelemente zueinander festgelegt wurde, die Anzeigesteuereinheit (122) veranlasst, dass das zum Zuordnungsanzeigebereich bewegte neue Eingabedatenelement im Zuordnungsanzeigebereich und/oder im Anzeigebereich in einem Modus angezeigt wird, in dem das neue Eingabedatenelement, das zum Zuordnungsanzeigebereich bewegt wurde, anderen Eingabedatenelementen zugeordnet wird, die in den Zuordnungsanzeigebereich bewegt wurden.

4. Anzeigesteuervorrichtung nach Anspruch 1, wobei, wenn die durch die Eingabeeinheit (111) empfangenen Eingabedatenelemente Bedingungen für das Zuordnungsziel erfüllen, die Anzeigesteuereinheit (122) veranlasst, dass die Eingabedatenelemente, die die Bedingungen für das Zuordnungsziel erfüllt, im Anzeigebereich in einem Anzeigemodus dargestellt werden, der anzeigt, dass die Eingabedatenelemente, die die Bedingungen für das Zuordnungsziel erfüllen, einander zugeordnet sind.

5. Anzeigesteuervorrichtung nach Anspruch 4, wobei, wenn gemeinsamer Text in den Eingabedatenelementen enthalten ist, die Anzeigesteuereinheit (122) veranlasst, dass die Eingabedatenelemente im Anzeigebereich in einem Anzeigemodus dargestellt werden, der anzeigt, dass die Eingabedatenelemente, die den gemeinsamen Text enthalten, einander zugeordnet sind.

6. Anzeigesteuervorrichtung nach Anspruch 1, wobei die Anzeigesteuereinheit (122) veranlasst, dass das neue Eingabedatenelement, das das Zuordnungsziel im Anzeigebereich ist, in einem Anzeigemodus dargestellt wird, der anzeigt, dass das neue Eingabedatenelement, das das Zuordnungsziel ist, dem aktuellsten Eingabedatenelement oder einem Anzeigebereich, in dem das aktuellste Eingabedatenelement dargestellt wird, unter den auf der Anzeigeeinheit (112) geposteten Eingabedatenelementen und Anzeigebereichen zugeordnet ist.

7. Anzeigesteuervorrichtung nach Anspruch 1 oder 6, wobei, wenn die Eingabeeinheit (111) eine Anweisung empfängt, die anzeigt, dass das empfangene Eingabedatenelement nicht einem anderen Eingabedatenelement zugeordnet werden sollen, wenn das Eingabedatenelement empfangen wird,
die Anzeigesteuereinheit (122) veranlasst, dass das durch die Eingabeeinheit (111) empfangene Eingabedatenelement in einem Anzeigebereich angezeigt wird, der dem Benutzer, der das Eingabedatenelement empfängt, in einem Anzeigemodus zugewiesen wird, der anzeigt, dass das durch die Eingabeeinheit (111) empfangene Eingabedatenelement nicht den anderen auf der Anzeigeeinheit (112) angezeigten Eingabedatenelementen zugeordnet ist.

8. Anzeigesteuerverfahren mit den Schritten:
Empfangen von Eingabedatenelementen, die durch einen Benutzer (A, B, C) eingegeben werden;
Anzeigen von Eingabedatenelementen vom Benutzer in einem Anzeigebereich, der dem Benutzer zugewiesen ist, unter mehreren Anzeigebereichen, in denen Eingabedatenelemente angezeigt werden;
(i) wenn ein durch den Benutzer eingegebenes neues Eingabedatenelement und mindestens eines von geposteten Eingabedatenelementen und mindestens einer von Anzeigebereichen, die bereits auf der Anzeigeeinheit (112) angezeigt werden, durch den Benutzer dafür spezifiziert sind, einander zugeordnet zu sein, und das neue Eingabedatenelement durch den Benutzer dafür spezifiziert ist, auf der Anzeigeeinheit (112) angezeigt zu werden, oder
(ii) wenn das durch den Benutzer eingegebene neue Eingabedatenelement und die geposteten Eingabedaten, die auf der Anzeigeeinheit (112) angezeigt werden, eine vorgegebene Bedingung erfüllen:
Setzen des durch den Benutzer eingegebenen neuen Eingabedatenelements als ein Zuordnungsziel, das mindestens einem geposteten Eingabedatenelement und mindestens einem Anzeigebereich zugeordnet werden soll, die auf der Anzeigeeinheit (112) angezeigt werden;
Veranlassen, dass das neue Eingabedatenelement, das das Zuordnungsziel ist, in einer Zeitfolge in einer vorgegebenen Richtung in dem dem Benutzer zugewiesenen Anzeigebereich in einem Anzeigemodus dargestellt wird, der anzeigt, dass das neue Eingabedatenelement, das das Zuordnungsziel ist, mindestens einem der im Anzeigebereich angezeigten geposteten Eingabedatenelemente und dem Anzeigebereich zugeordnet ist; und
Anzeigen des neuen Eingabedatenelements, das durch den Benutzer eingegeben wird und als vom Zuordnungsziel verschiedenes Eingabedatenelement gesetzt ist, in mindestens einem der Anzeigebereiche;
**dadurch gekennzeichnet, dass**,
wenn sich zeigt, dass das neue Eingabedatenelement, das das Zuordnungsziel ist, einem geposteten Eingabedatenelement zugeordnet ist, das ein zugeordnetes Ziel ist, das Anzeigesteuerverfahren ferner einen Schritt aufweist, der veranlasst, dass das neue Eingabedatenelement, das das Zuordnungsziel ist, in einem der folgenden Modi angezeigt wird:
(i) einem ersten Anzeigemodus, in dem ein Sprechblasenbild, das das neue Eingabedatenelement anzeigt, das das Zuordnungsziel ist, mit einem Sprechblasenbild verbunden ist, das ein gepostetes Eingabedatenelement anzeigt, das das zugeordnete Ziel ist;
(ii) einem zweiten Anzeigemodus, in dem das neue Eingabedatenelement, das das Zuordnungsziel ist, in einem Sprechblasenbild im gleichen Stil wie im Anzeigebereich dargestellt wird, in dem das gepostete Eingabedatenelement angezeigt wird, das das zugeordnete Ziel ist;
(iii) einem dritten Anzeigemodus, in dem eine Verbindungslinie, die das Sprechblasenbild, das das gepostete Eingabedatenelement anzeigt, das das zugeordnete Ziel ist, umgibt, und das Sprechblasenbild, das das neue Eingabedatenelement anzeigt, das das Zuordnungsziel ist, angezeigt wird; und
(iv) einem vierten Anzeigemodus, in dem der Anzeigebereich, in dem das neue Eingabedatenelement, das das Zuordnungsziel ist, neben dem Anzeigebereich angezeigt wird, in dem das gepostete Eingabedatenelement angezeigt wird, das das zugeordnete Ziel ist.

9. Programm, das einen Computer veranlasst zu arbeiten als:
eine Eingabeeinheit (111), die Eingabedatenelemente empfängt, die durch einen Benutzer (A, B, C) eingegeben werden;
eine Anzeigeeinheit (112), die mehrere Anzeigebereiche aufweist, in denen die Eingabedatenelemente angezeigt werden, und die Eingabedatenelemente vom Benutzer in einem dem Benutzer zugewiesenen Anzeigebereich anzeigt; und
eine Anzeigesteuereinheit (122), die,
(i) wenn ein durch den Benutzer eingegebenes neues Eingabedatenelement und mindestens ein gepostetes Eingabedatenelement und mindestens einer der Anzeigebereiche, die bereits auf der Anzeigeeinheit (112) angezeigt werden, durch den Benutzer als einander zugewiesen spezifiziert sind und das neue Eingabedatenelement durch den Benutzer dafür spezifiziert ist, auf der Anzeigeeinheit (112) angezeigt zu werden, oder
(ii) wenn das durch den Benutzer eingegebene neue Eingabedatenelement und gepostete Eingabedatenelemente, die auf der Anzeigeeinheit (112) angezeigt werden, eine vorgegebene Bedingung erfüllen,
das durch den Benutzer eingegebene neue Eingabedatenelement als Zuordnungsziel setzt, das mindestens einem geposteten Eingabedatenelement und mindestens einem Anzeigebereich zugeordnet werden soll, die auf der Anzeigeeinheit (112) angezeigt werden,
wobei die Anzeigesteuereinheit (122) ferner
veranlasst, dass das neue Eingabedatenelement, das das Zuordnungsziel ist, in einer Zeitfolge in einer vorgegebenen Richtung im Anzeigebereich, der dem Benutzer zugeordnet ist, in einem Anzeigemodus dargestellt wird, der anzeigt, dass das neue Eingabedatenelement, das das Zuordnungsziel ist, mindestens einem auf der Anzeigeeinheit (112) angezeigten geposteten Eingabedatenelement und dem Anzeigebereich zugeordnet ist; und
die anderen Eingabedatenelemente, die mit einem Thema in Beziehung stehen, das von einem Thema verschieden ist, das mit dem durch den Benutzer eingegebenen neuen Eingabedatenelement in Beziehung steht, in mindestens einem der Anzeigebereiche anzeigt;
**dadurch gekennzeichnet, dass**,
wenn sich zeigt, dass das neue Eingabedatenelement, das das Zuordnungsziel ist, einem geposteten Eingabedatenelement zugeordnet ist, das ein zugeordnetes Ziel ist, die Anzeigesteuereinheit (122) veranlasst, dass das neue Eingabedatenelement, das das Zuordnungsziel ist, in einem Modus angezeigt wird unter:
(i) einem ersten Anzeigemodus, in dem ein Sprechblasenbild, das das neue Eingabedatenelement anzeigt, das das Zuordnungsziel ist, mit einem Sprechblasenbild verbunden ist, das ein gepostetes Eingabedatenelement anzeigt, das das zugeordnete Ziel ist;
(ii) einem zweiten Anzeigemodus, in dem das neue Eingabedatenelement, das das Zuordnungsziel sind, in einem Sprechblasenbild im gleichen Stil wie im Anzeigebereich dargestellt wird, in dem ein gepostetes Eingabedatenelement angezeigt wird, das das zugeordnete Ziel ist;
(iii) einem dritten Anzeigemodus, in dem eine Verbindungslinie, die das Sprechblasenbild, das ein gepostetes Eingabedatenelement anzeigt, das das zugeordnete Ziel ist, umgibt, und das Sprechblasenbild, das das neue Eingabedatenelement anzeigt, das das Zuordnungsziel sind, angezeigt wird; und
(iv) einem vierten Anzeigemodus, in dem der Anzeigebereich, in dem das neue Eingabedatenelement, das das Zuordnungsziel ist, neben dem Anzeigebereich angezeigt wird, in dem ein gepostetes Eingabedatenelement angezeigt wird, das das zugeordnete Ziel ist.

## Revendications

1. Dispositif de commande d'affichage comprenant :
une unité d'entrée (111) qui reçoit des données d'entrée qui sont appliquées en entrée par un utilisateur (A, B, C) ;
une unité d'affichage (112) qui comprend une pluralité de zones d'affichage dans lesquelles les données d'entrée sont affichées, et qui affiche les données d'entrée en provenance de l'utilisateur dans une zone d'affichage affectée à l'utilisateur ; et
une unité de commande d'affichage (122)
configurée pour, (i) lorsque de nouvelles données d'entrée appliquées en entrée par l'utilisateur et au moins l'une parmi des données d'entrée postées et l'une des zones d'affichage déjà affichées sur l'unité d'affichage (112) sont désignées par l'utilisateur afin d'être associées les unes aux autres, et les nouvelles données d'entrée sont désignées par l'utilisateur afin d'être affichées sur l'unité d'affichage (112) ; ou
(ii) lorsque les nouvelles données d'entrée appliquées en entrée par l'utilisateur et les données d'entrée postées affichées sur l'unité d'affichage (112) satisfont une condition prédéterminée,
définir les nouvelles données d'entrée appliquées en entrée par l'utilisateur en tant qu'une cible d'association qui doit être associée à au moins l'une des données d'entrée postées et la zone d'affichage affichée sur l'unité d'affichage (112) ;
l'unité de commande d'affichage (122) étant en outre configurée pour :
amener les nouvelles données d'entrée qui correspondent à la cible d'association à être affichées dans une série temporelle dans une direction prédéterminée dans la zone d'affichage affectée à l'utilisateur dans un mode d'affichage indiquant que les nouvelles données d'entrée qui correspondent à la cible d'association sont associées à au moins l'une des données d'entrée postées affichées sur l'unité d'affichage (112) et à la zone d'affichage ; et
afficher les nouvelles données d'entrée appliquées en entrée par l'utilisateur et définies comme distinctes de la cible d'association dans au moins l'une des zones d'affichage, **caractérisé en ce que**
lorsque que les nouvelles données d'entrée qui correspondent à la cible d'association sont montrées comme étant associées aux données d'entrée postées qui correspondent à une cible d'association, l'unité de commande d'affichage (122) amène les nouvelles données d'entrée qui correspondent à la cible d'association à être affichées dans l'un quelconque parmi :
(i) un premier mode d'affichage dans lequel une image bulle affichant les nouvelles données d'entrée qui correspondent à la cible d'association est liée à une image bulle affichant les données d'entrée postées qui correspondent à la cible d'association ;
(ii) un deuxième mode d'affichage dans lequel les nouvelles données d'entrée qui correspondent à la cible d'association sont affichées dans une image bulle du même style que la zone d'affichage dans laquelle sont affichées les données d'entrée postées qui correspondent à la cible d'association ;
(iii) un troisième mode d'affichage dans lequel est affichée une ligne de liaison qui entoure l'image bulle affichant les données d'entrée postées qui correspondent à la cible d'association et l'image bulle affichant les nouvelles données d'entrée qui correspondent à la cible d'association ; et
(iv) un quatrième mode d'affichage dans lequel la zone d'affichage dans laquelle sont affichées les nouvelles données d'entrée qui correspondent à la cible d'association est affichée à côté de la zone d'affichage dans laquelle sont affichées les données d'entrée postées qui correspondent à la cible d'association.

2. Dispositif de commande d'affichage selon la revendication 1, dans lequel l'unité de commande d'affichage (122) amène les nouvelles données d'entrée qui correspondent à la cible d'association à être affichées dans la zone d'affichage dans un mode d'affichage indiquant que les nouvelles données d'entrée qui correspondent à la cible d'association sont associées aux données d'entrée postées, ou la zone d'affichage désignée par l'utilisateur parmi les données d'entrée affichées sur l'unité d'affichage (112) et les zones d'affichage.

3. Dispositif de commande d'affichage selon la revendication 1, dans lequel, lorsque les nouvelles données d'entrée qui correspondent à la cible d'association affichées dans la zone d'affichage sont déplacées vers une zone d'affichage d'association déterminée à l'avance comme étant une zone dans un écran d'affichage pour associer les données d'entrée entre elles, l'unité de commande d'affichage (122) amène les nouvelles données d'entrée déplacées vers la zone d'affichage d'association à être affichées dans au moins l'une parmi la zone d'affichage d'association et la zone d'affichage dans un mode dans lequel les nouvelles données d'entrée déplacées vers la zone d'affichage d'association sont associées à d'autres données d'entrée déplacées vers la zone d'affichage d'association.

4. Dispositif de commande d'affichage selon la revendication 1, dans lequel, lorsque les données d'entrée reçues par l'unité d'entrée (111) satisfont des conditions pour la cible d'association, l'unité de commande d'affichage (122) amène les données d'entrée satisfaisant les conditions pour la cible d'association à être affichées dans la zone d'affichage dans un mode d'affichage indiquant que les données d'entrée satisfaisant les conditions pour la cible d'association sont associées entre elles.

5. Dispositif de commande d'affichage selon la revendication 4, dans lequel, lorsque du texte commun est compris dans les données d'entrée, l'unité de commande d'affichage (122) amène les données d'entrée dans la zone d'affichage à être affichées dans un mode d'affichage indiquant que les données d'entrée comprenant le texte commun sont associées entre elles.

6. Dispositif de commande d'affichage selon la revendication 1, dans lequel l'unité de commande d'affichage (122) amène les nouvelles données d'entrée qui correspondent à la cible d'association dans la zone d'affichage à être affichées dans un mode d'affichage indiquant que les nouvelles données d'entrée qui correspondent à la cible d'association sont associées à des données d'entrée les plus récentes, ou une zone d'affichage dans laquelle les données d'entrée les plus récentes sont affichées parmi les données d'entrée postées sur l'unité d'affichage (112) et les zones d'affichage.

7. Dispositif de commande d'affichage selon la revendication 1 ou 6, dans lequel, si l'unité d'entrée (111) reçoit une instruction indiquant que les données d'entrée reçues ne doivent pas être associées à d'autres données d'entrée lors de la réception des données d'entrée,
l'unité de commande d'affichage (122) amène les données d'entrée reçues par l'unité d'entrée (111) à être affichées dans une zone d'affichage affectée à l'utilisateur recevant les données d'entrée dans un mode d'affichage indiquant que les données d'entrée reçues par l'unité d'entrée (111) ne sont pas associées aux autres données d'entrée affichées sur l'unité d'affichage (112).

8. Procédé de commande d'affichage comprenant les étapes :
recevoir des données d'entrée qui sont appliquées en entrée par un utilisateur (A, B, C) ;
afficher les données d'entrée en provenance de l'utilisateur dans une zone d'affichage affectée à l'utilisateur parmi une pluralité de zones d'affichage dans lesquelles sont affichées les données d'entrée ;
(i) lorsque de nouvelles données d'entrée appliquées en entrée par l'utilisateur et au moins l'une parmi des données d'entrée postées et l'une des zones d'affichage déjà affichées sur l'unité d'affichage (112) sont désignées par l'utilisateur afin d'être associées les unes aux autres, et lorsque les nouvelles données d'entrée sont désignées par l'utilisateur afin d'être affichées sur l'unité d'affichage (112) ; ou
(ii) lorsque les nouvelles données d'entrée appliquées en entrée par l'utilisateur et les données d'entrée postées affichées sur l'unité d'affichage (112) satisfont une condition prédéterminée,
définir les nouvelles données d'entrée appliquées en entrée par l'utilisateur en tant qu'une cible d'association qui doit être associée à au moins l'une des données d'entrée postées et à la zone d'affichage affichée sur l'unité d'affichage (112) ;
amener les nouvelles données d'entrée qui correspondent à la cible d'association à être affichées dans une série temporelle dans une direction prédéterminée dans la zone d'affichage affectée à l'utilisateur dans un mode d'affichage indiquant que les nouvelles données d'entrée qui correspondent à la cible d'association sont associées à au moins l'une des données d'entrée postées affichées dans la zone d'affichage et à la zone d'affichage ; et
afficher les nouvelles données d'entrée appliquées en entrée par l'utilisateur et définies comme distinctes de la cible d'association dans au moins l'une des zones d'affichage ;
**caractérisé en ce que**
lorsque que les nouvelles données d'entrée qui correspondent à la cible d'association sont montrées comme étant associées aux données d'entrée postées qui correspondent à une cible d'association, le procédé de commande d'affichage de l'unité de commande d'affichage (122) comprend en outre l'amenée des nouvelles données d'entrée qui correspondent à la cible d'association à être affichées dans l'un parmi :
(i) un premier mode d'affichage dans lequel une image bulle affichant les nouvelles données d'entrée qui correspondent à la cible d'association est liée à une image bulle affichant les données d'entrée postées qui correspondent à la cible d'association ;
(ii) un deuxième mode d'affichage dans lequel les nouvelles données d'entrée qui correspondent à la cible d'association sont affichées dans une image bulle du même style que la zone d'affichage dans laquelle sont affichées les données d'entrée postées qui correspondent à la cible d'association ;
(iii) un troisième mode d'affichage dans lequel est affichée une ligne de liaison qui entoure l'image bulle affichant les données d'entrée postées qui correspondent à la cible d'association et l'image bulle affichant les nouvelles données d'entrée qui correspondent à la cible d'association ; et
(iv) un quatrième mode d'affichage dans lequel la zone d'affichage dans laquelle sont affichées les nouvelles données d'entrée qui correspondent à la cible d'association est affichée à côté de la zone d'affichage dans laquelle sont affichées les données d'entrée postées qui correspondent à la cible d'association.

9. Programme destiné à amener un ordinateur à fonctionner en tant que :
une unité d'entrée (111) qui reçoit des données d'entrée qui sont appliquées en entrée par un utilisateur (A, B, C) ;
une unité d'affichage (112) qui comprend une pluralité de zones d'affichage dans lesquelles les données d'entrée sont affichées, et qui affiche les données d'entrée en provenance de l'utilisateur dans une zone d'affichage affectée à l'utilisateur ; et
une unité de commande d'affichage (122) qui définit,
(i) lorsque de nouvelles données d'entrée appliquées en entrée par l'utilisateur et au moins l'une parmi des données d'entrée postées et l'une des zones d'affichage déjà affichées sur l'unité d'affichage (112) sont désignées par l'utilisateur afin d'être associées les unes aux autres, et lorsque les nouvelles données d'entrée sont désignées par l'utilisateur afin d'être affichées sur l'unité d'affichage (112) ; ou
(ii) lorsque les nouvelles données d'entrée appliquées en entrée par l'utilisateur et les données d'entrée postées affichées sur l'unité d'affichage (112) satisfont une condition prédéterminée,
les nouvelles données d'entrée appliquées en entrée par l'utilisateur en tant qu'une cible d'association qui doit être associée à au moins l'une des données d'entrée postées et à la zone d'affichage affichée sur l'unité d'affichage (112) ;
l'unité de commande d'affichage (122), en outre :
amène les nouvelles données d'entrée qui correspondent à la cible d'association à être affichées dans une série temporelle dans une direction prédéterminée dans la zone d'affichage affectée à l'utilisateur dans un mode d'affichage indiquant que les nouvelles données d'entrée qui correspondent à la cible d'association sont associées à au moins l'une des données d'entrée postées affichées sur l'unité d'affichage (112) et à la zone d'affichage ; et
affiche les autres données d'entrée connexes à un thème qui est différent d'un thème connexe aux nouvelles données d'entrée appliquées en entrée par l'utilisateur, dans au moins l'une des zones d'affichage ;
**caractérisé en ce que**
lorsque que les nouvelles données d'entrée qui correspondent à la cible d'association sont montrées comme étant associées aux données d'entrée postées qui correspondent à une cible d'association, l'unité de commande d'affichage (122) amène les nouvelles données d'entrée qui correspondent à la cible d'association à être affichées dans l'un quelconque des modes ci-dessous :
(i) un premier mode d'affichage dans lequel une image bulle affichant les nouvelles données d'entrée qui correspondent à la cible d'association est liée à une image bulle affichant les données d'entrée postées qui correspondent à la cible d'association ;
(ii) un deuxième mode d'affichage dans lequel les nouvelles données d'entrée qui correspondent à la cible d'association sont affichées dans une image bulle du même style que la zone d'affichage dans laquelle sont affichées les données d'entrée postées qui correspondent à la cible d'association ;
(iii) un troisième mode d'affichage dans lequel est affichée une ligne de liaison qui entoure l'image bulle affichant les données d'entrée postées qui correspondent à la cible d'association et l'image bulle affichant les nouvelles données d'entrée qui correspondent à la cible d'association ; et
(iv) un quatrième mode d'affichage dans lequel la zone d'affichage dans laquelle sont affichées les nouvelles données d'entrée qui correspondent à la cible d'association est affichée à côté de la zone d'affichage dans laquelle sont affichées les données d'entrée postées qui correspondent à la cible d'association.
